(19) **Europäisches Patentamt / European Patent Office / Office européen des brevets**

(11) **EP 2 088 456 A2**

(12) # EUROPEAN PATENT APPLICATION

(43) Date of publication:
**12.08.2009 Bulletin 2009/33**

(51) Int Cl.:
***G02B 5/30*** *(2006.01)*     *G02B 27/28* *(2006.01)*

(21) Application number: **08168035.7**

(22) Date of filing: **31.10.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **14.11.2007 US 987931 P**

(71) Applicant: **JDS Uniphase Corporation Milpitas, CA 95035 (US)**

(72) Inventors:
• **Shemo, David M.**
 **Windsor, CA 95492 (US)**

• **Zieba, Jerry**
 **Santa Rosa, CA 95405 (US)**

(74) Representative: **Fulton, David James**
 **Murgitroyd & Company**
 **Scotland House**
 **165-169 Scotland Street**
 **Glasgow**
 **Strathclyde G5 8PL (GB)**

<u>Remarks:</u>
Claims 16, 18-22, 24-26, and 28-31 are deemed to be abandoned due to non-payment of the claims fees (Rule 45(3) EPC).

(54) **Achromatic converter of a spatial distribution of polarization of light**

(57) An achromatic converter of spatial distribution of polarization from a first to a second predefined distribution of polarization is described. The converter comprises a plurality of photo-aligned quarter-wave or half-wave liquid crystal polymer layers, wherein the patterns of alignment of the layers are correlated with each other so as to make polarization conversion achromatic. Achromatic polarization vortices can be formed. The polarization conversion efficiencies over 97% have been demonstrated over most of the visible spectrum of light. The polarization converters can be used in imaging, photolithography, optical tweezers, micromachining, and other applications.

FIG. 2A

EP 2 088 456 A2

Description

## TECHNICAL FIELD

The present invention is related to optical elements for converting the spatial distribution of polarization of light from a first to a second pre-determined spatial distribution of polarization, and in particular for converting said distribution over a broad range of wavelengths of light.

## BACKGROUND OF THE INVENTION

A waveplate, or an optical retarder, is an optical device that alters a polarization state of an incident light by introducing a pre-determined phase shift to a phase between two orthogonally polarized components of the incident light. Conventionally, the introduced phase shift is referred to as the waveplate retardance and is measured in fractions of wavelength multiplied by $2\pi$. A waveplate that adds a phase shift of $\pi$ between the orthogonal polarization components is referred to as a half-wave plate (HWP), and a waveplate that adds a phase shift of $\pi/2$ is referred to as a quarter-wave plate (QWP).

A material having different refractive indices for the two orthogonally polarized components of the incident light is called a birefringent material. In any birefringent material there is at least one axis called optical axis. A waveplate can be manufactured from a birefringent material. When a linearly polarized light wave is passed through a waveplate perpendicular to the optical axis of the birefringent material of the waveplate, the light wave splits into two waves called ordinary and extraordinary waves, which are linearly polarized in mutually perpendicular directions. Due to different refractive indices, the two waves travel through the material at different speeds, which results in a phase shift between these two waves. When the waveplate is a HWP, the phase shift results in rotating the polarization axis of the light wave at an angle that is twice the angle between the polarization axis and the optical axis of the waveplate.

In conventional applications one typically uses a spatially-uniform waveplate to change polarization state of a uniformly-polarized optical beam. The uniformly-polarized optical beam is a beam having a polarization state that does not vary across the cross-section of the beam. Recently, however, it has been recognized that inducing spatial polarization variations across a uniformly polarized beam is a useful wavefront-shaping tool. When a beam with a space-variant polarization is analyzed using a linear polarizer, the net effect is an addition of a spatially-variant phase shift, known as the Pancharatnam-Berry phase, across the beam. As is shown by Bomzon et al. in an article entitled "Space-variant Pancharatnam-Berry phase optical elements with computer-generated subwavelength gratings", Opt. Lett., Vol. 27, No. 13, p.1141-1143 (2002), which is incorporated herein by reference, analyzing a spatially variant polarization of an optical beam with a polarizer results in a specific shaping of the beam's wavefront. Moreover, a spatially-variant waveplate can be used to form a linearly polarized optical beam, in which the polarization orientation, i.e. the direction of the electric field vector of the beam radiation, varies across the cross-section of the beam. A practical example of a beam having a spatially-variant linear polarization is a radially-polarized or a tangentially-polarized beam, in which the local axis of polarization is either radial, that is, parallel to a line connecting a local point to the center of the beam, or tangential, that is, perpendicular to that line.

Whether the beam is radially or tangentially polarized, its polarization direction depends only upon an azimuth angle $\alpha$ of a particular spatial location and does not depend on the radial distance r from the beam axis. These types of polarized beams are sometimes referred to as cylindrical vector beams or polarization vortex beams. The term "polarization vortex" is related to the term "optical vortex". An optical vortex is a point in a cross-section of a beam which exhibits a phase anomaly so that the electrical field of the beam radiation evolves through a multiple of $\pi$, in any closed path traced around that point. Similarly, a polarization vortex is a linearly polarized state in which the direction of polarization evolves through a multiple of $\pi$ about the beam axis. Such a beam, when focused, adopts a zero intensity at the beam's axis. Polarization vortex beams have a number of unique properties that can be advantageously used in a variety of practical applications such as particle trapping (optical tweezers); microscope resolution enhancement; and photolithography.

Optical polarization vortex beams can be readily obtained by passing a uniformly polarized optical beam through a HWP having spatially varying polarization axis direction evolving through a multiple of $\pi/2$ about the waveplate axis. Due to the angle doubling property of a HWP mentioned above, the direction of polarization of the beam passed through such a waveplate will evolve through a multiple of $\pi$ about the beam axis. See, for example, an article by Stalder et al. entitled "Linearly polarized light with axial symmetry generated by liquid-crystal polarization converters", Opt. Lett., Vol. 21, No. 23, pp. 1948-1950, Dec. 1, 1996, which is incorporated herein by reference. Stalder teaches a liquid crystal cell with a spatially varying alignment of the liquid crystal layer that is used to create the spatially varying polarization axis direction of the birefringent liquid crystal retarder.

The prior art methods of generating polarization vortex beams share a common drawback related to the fact that a spatially varying HWP of the prior art has a retardation of one half of a wavelength at one wavelength only.

Therefore, only monochromatic polarization vortices can be formed. For instance, a monochromatic laser beam can be used to generate a monochromatic polarization vortex for an optical tweezers application. Yet, many important optical applications call for polychromatic beams; for example, most applications related to the fields of vision and imaging such as visual displays or microscopy are polychromatic. The visible light spans the wavelength range of approximately from 380 to over 680nm, that is, the visible light is varying by more than 56% as compared to a center wavelength of 530nm. Other examples of applications that require polychromatic performance of a corresponding optical system include a multi-wavelength optical data storage, wherein different wavelength laser sources are used for reading and writing data on a disk, or a femtosecond micromachining application, because femtosecond light pulses are polychromatic by their nature. Therefore, the existing state of the art does not provide practical solutions for many potential applications where an achromatic or polychromatic performance of a polarization distribution-forming optical element is required.

A number of approaches are known in the prior art to achieve an achromatic performance of a spatially varying optical retarder. One approach, widely used in a liquid crystal display industry, consists in adding a spatially uniform optical retarder film, or an optical retarder layer, to a liquid crystal display optical stack, which makes the display contrast ratio more achromatic and also improves the viewing angle of the display. For example, an optical retarder is added to a liquid crystal display stack structure taught by Tillin in US Patent 6,900,865, which is incorporated herein by reference. Further, a uniform liquid crystal retarder added to a liquid crystal display is taught by Sharp et al. in US Patents 6,380,997; 6,078,374; and 6,046,786, which are incorporated herein by reference. In the liquid crystal displays of Sharp the known achromatic performance of a non-spatially varying compound waveplate is used to achieve an achromatic performance of up to four states of brightness of a display. It should be noted that the non-spatially varying compound achromatic waveplates have been known for a long time; see, for example, Koester, "Achromatic combinations of half-wave plates," J. Opt. Soc. Of America Vol. 49(4), p.405-409 (1959), which is incorporated herein by reference.

Another approach relies on creating achromatic sub-wavelength grating-based optical retarder structures using nanoimprint lithography, as is reported by Deng et al. in an article entitled "Achromatic wave plates for optical pickup units fabricated by use of imprint lithography", Opt. Lett., Vol. 30, p. 2614-2616 (2005), which is incorporated herein by reference. The achromatic sub-wavelength gratings can also be manufactured using conventional microlithography methods for mid-to far-infrared photonics applications, as is taught by Chun et al. in an article entitled "Achromatic waveplate array for polarimetric imaging", SPIE - Int. Soc. Opt. Eng., vol. 4481, p.216-27 (2002).

The approaches to achieving achromatic performance of spatially variant optical retarders based on using uniform retardation films or liquid crystal layers suffer from the drawback of a limited range of output polarization states over which the achromaticity is achieved. The approaches based on subwavelength gratings do not have this disadvantage; however, at least for the visible spectral range, they have to rely on rather exotic and not very well developed technologies, such as nano-imprint lithography. Still further, in the pixelated retarder structures of the prior art such as a liquid crystal display or a discrete array of subwavelength gratings, an undesirable diffraction of light can occur at sharp boundaries between areas having differing values of retardation.

Advantageously, an achromatic converter element of the present invention obviates the above-mentioned drawbacks. It can convert a spatial distribution of polarization of a light having a wide wavelength range, for example a visible light, from any pre-determined distribution of input polarization to any other pre-determined distribution of output polarization of light with very high efficiency and in a smooth, continuous fashion, avoiding the diffraction effects on sharp edges or boundaries. Further, advantageously and preferably, the polarization converter of the present invention can be manufactured in a variety of configurations using a well-established and mature liquid crystal technology. Still further, advantageously, the polarization converter of the present invention is intrinsically less sensitive to variations in the retarder layer thickness, as compared to prior-art monochromatic polarization converters or a prior-art zero-order waveplates.

## SUMMARY OF THE INVENTION

In accordance with the invention there is provided an optical element for converting a lateral distribution of polarization of an optical beam having at least one wavelength band characterized by a center wavelength and a bandwidth, from a first to a second pre-determined lateral distribution of polarization, wherein the optical element comprises a stack of birefringent layers, wherein the birefringence of each layer of the stack is characterized by a retardance that is substantially constant across the layer, and a direction of a local axis of birefringence that varies, smoothly and gradually, across the layer, and wherein the variations of the direction of the local axes of birefringence of the layers are coordinated therebetween, so as to convert the distribution of polarization of the optical beam from the first to the second distribution of polarization across the entire wavelength band of the optical beam.

Of a particular interest to the present invention is an optical vortex element, wherein the first and the second lateral distributions of polarization are distributions of linear polarization, wherein an angle of local axis of output polarization depends only on a local azimuthal coordinate, such that the angle changes by a multiple of $\pi$ in any closed path traced around a central point, called a "vortex point", of the clear aperture of the optical element.

In accordance with another aspect of the invention there is further provided a polarization-transforming polarizer comprising: a first optical element, for receiving an optical beam and converting a lateral distribution of polarization of the optical beam; a polarizer element optically coupled to the first optical element; and a second optical element, optically coupled to said polarizer element, for further converting the lateral distribution of polarization of the optical beam, and for outputting the optical beam.

In accordance with yet another aspect of the invention there is further provided a use of the above described optical elements which includes correcting spatial polarization aberrations and, or creating polarization vortices and, or reducing Fresnel losses in visual displays; polarization microscopy; photolithography; imaging; optical data storage; authenticating documents, goods, or articles; and femtosecond micromachining.

## BRIEF DESCRIPTION OF THE DRAWINGS

Exemplary embodiments will now be described in conjunction with the drawings in which:

FIG. 1 is a view of prior-art monochromatic and achromatic waveplates between a pair of polarizers, and corresponding transmission spectra;

FIGS. 2A and 2B are isometric views of polarization vortex waveplates and polychromatic optical beams passing therethrough, according to an exemplary embodiment of the present invention;

FIG. 3A is an isometric view of a polarization-transforming polarizer according to the present invention;

FIG. 3B is an exploded view of the polarization-transforming polarizer of FIG. 3A;

FIG. 4 is a plot of input and output lateral distributions of polarization corresponding to a polarization vortex;

FIG. 5 is a plot of the angles of the local optical axes of layers vs. required amount of polarization rotation in a two-layer achromatic polarization converter according to the present invention;

FIG. 6 is a plot of the angles of the local optical axes of layers vs. x- and y-position in a two-layer achromatic polarization converter according to one embodiment of present invention;

FIG. 7 is a spectrum of polarization conversion efficiency (PCE) of a two-layer achromatic polarization converter according to one embodiment of the present invention;

FIG. 8 is a plot of the angles of the local optical axes of layers vs. x- and y-position in a two-layer achromatic polarization converter according to another embodiment of the present invention;

FIG. 9 is a spectrum of PCE of a two-layer achromatic polarization converter according to the embodiment of the present invention corresponding to FIG. 8;

FIG. 10 is a plot of input and output lateral distributions of polarization, wherein the output lateral distribution is symmetrical around a vertical central axis;

FIG. 11 is a plot of the angles of the local optical axes of layers vs. x- and y-position in two-layer achromatic polarization converter of the present invention, corresponding to the polarization axes distribution of FIG. 10;

FIG. 12 is a spectrum of PCE of a two-layer achromatic polarization converter of the present invention, corresponding to the polarization axes distribution of FIG. 10;

FIGS. 13 and 14 are: a plot of the angles of the local optical axes of layers vs. required amount of polarization rotation; and a corresponding spectrum of PCE, respectively, in a three-layer achromatic polarization converter according to an *Embodiment A* of the present invention;

FIGS. 15 and 16 are: a plot of the angles of the local optical axes of layers vs. required amount of polarization rotation; and a corresponding spectrum of PCE, respectively, in a three-layer achromatic polarization converter according to an *Embodiment B* of the present invention;

FIGS. 17 and 18 are: a plot of the angles of the local optical axes of layers vs. required amount of polarization rotation; and a corresponding spectrum of PCE, respectively, in a three-layer achromatic polarization converter according to an *Embodiment C* of the present invention;

FIGS. 19 and 20 are: a plot of the angles of the local optical axes of layers vs. required amount of polarization rotation; and a corresponding spectrum of PCE, respectively, in a three-layer achromatic polarization converter according to an *Embodiment D* of the present invention;

FIGS. 21 and 22 are: a plot of the angles of the local optical axes of layers vs. required amount of polarization rotation; and a corresponding spectrum of PCE, respectively, in a three-layer achromatic polarization converter according to an *Embodiment E* of the present invention;

FIG. 23 is a circuit diagram of a polarization microscope showing a train of optical elements, comprising a polarization correcting element of the present invention, and showing corresponding optical polarization distributions along the train;

FIG. 24 is a side cross-sectional view of a rear projection television set employing a polarization converting element of the present invention;

FIG. 25 is an optical polarization map of a light beam illuminating the screen of the rear projection television set of FIG. 24, with and without the polarization converting element of the present invention.

## DETAILED DESCRIPTION OF THE INVENTION

While the present teachings are described in conjunction with various embodiments and examples, it is not intended that the present teachings be limited to such embodiments. On the contrary, the present teachings encompass various alternatives, modifications and equivalents, as will be appreciated by those of skill in the art.

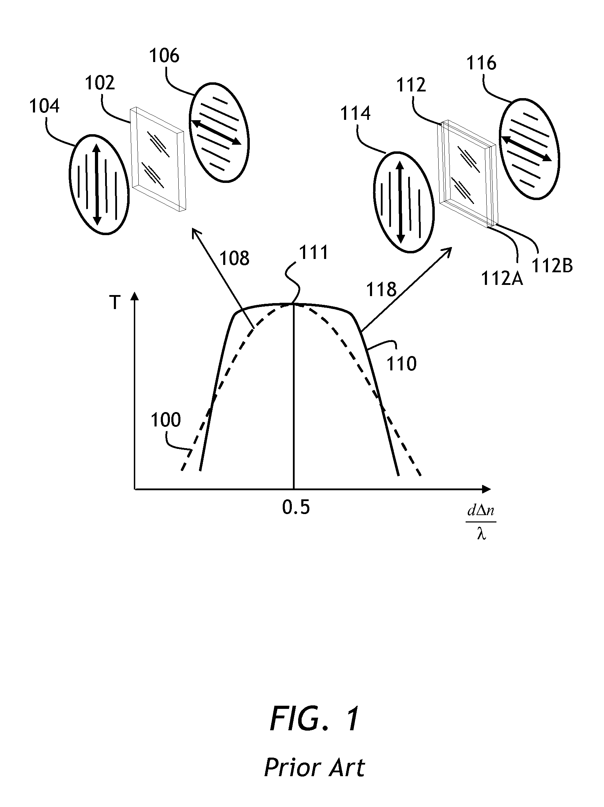

Referring to FIG. 1, a dashed line 100 denotes a transmission spectrum of a half-wave plate (HWP) 102 rotated at 45° between crossed polarizers 104 and 106, wherein the spectrum 100 is plotted as a function of $d\Delta n/\lambda$, wherein d and $\Delta n$ are the thickness and the birefringence of the HWP 102, respectively. It is seen that at $d\Delta n/\lambda$ =0.5, that is, at a central wavelength of the HWP 102, the transmission spectrum 100 reaches its maximum at a point 111. A solid line 110 denotes a transmission spectrum of a compound half-wave plate 112, consisting of two waveplates 112A and 112B, and placed between crossed polarizers 114 and 116, wherein the spectrum 110 is plotted as a function of $d\Delta n/\lambda$. It is seen that at $d\Delta n/\lambda$ =0.5 the transmission spectrum 110 also reaches a maximum at the point 111. However, near the maximum point 111, the spectrum 110 corresponding to the compound waveplate 112 as depicted by an arrow 118, is flatter than the spectrum 100 corresponding to the compound waveplate 102 as depicted by an arrow 108. The values of retardance and the relative orientations of the optical axes of the waveplates 112A and 112B are chosen so that the spectrum 110 is as flat as possible, which ensures achromaticity of the waveplate 112, as well as relaxes tolerances on thicknesses of the waveplates 112A and 112B as compared to those of the waveplate 102. The rules for selecting the angles of optical axes and the retardance values are taught in the above-cited reference by Koester.

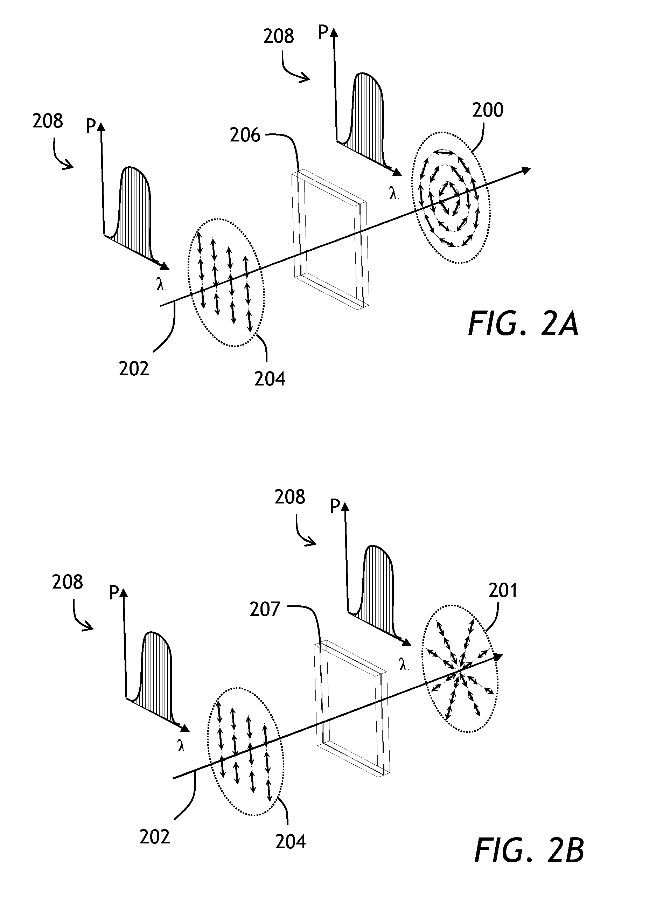

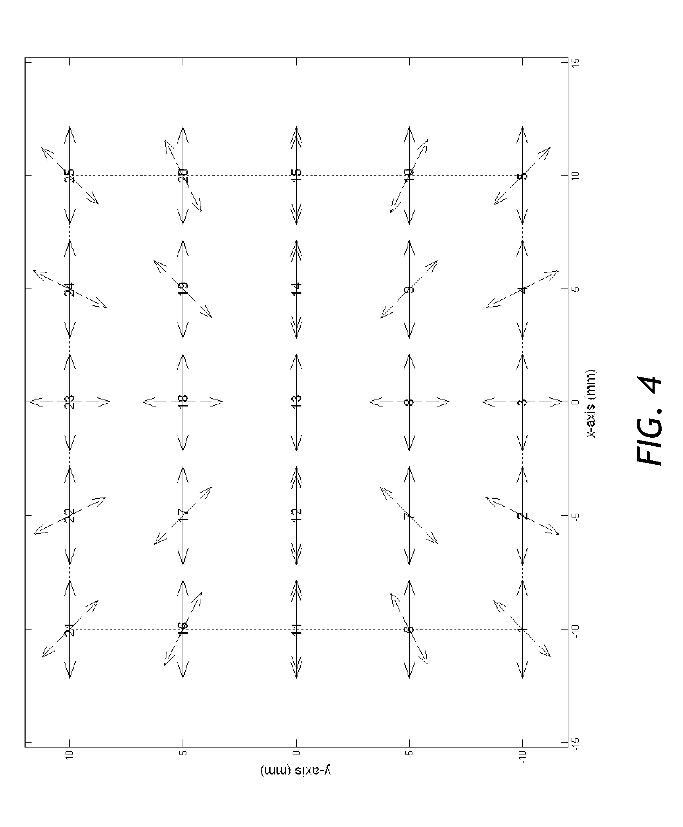

A converter of a spatial distribution of the optical polarization will now be described. The converter consists of at least two birefringent layers having spatially varying optical axes, wherein the patterns of orientation of these local optical axes are coordinated with each other, so as to achieve overall achromatic performance of the converter. Turning now to FIG. 2A, a tangential polarization vortex 200 is shown, which is obtained by passing a polychromatic beam 202 having a linear distribution of polarization 204 through an achromatic converter 206 of spatial distribution of polarization. Importantly and advantageously, an optical spectrum 208 of the fraction of the beam 202 having the sought-for polarization distribution 200 remains substantially unchanged after passing through the converter 206, due to a particular choice of distribution of angles of local optical axes of the layers, which will be described in detail in the forthcoming paragraphs and illustrated by forthcoming FIGS. 4 to 22.

Referring now to FIG. 2B, a radial polarization vortex 201 is shown, which is obtained by passing the polychromatic beam 202 having the linear distribution of polarization 204 through an achromatic converter 207 of spatial distribution of polarization. Importantly and advantageously, the optical spectrum 208 of the fraction of the beam 202 having the sought-for polarization distribution 201 remains substantially unchanged after passing through the converter 207, due to a particular choice of distribution of angles of local optical axes of the layers.

The above disclosed spatially varying achromatic waveplates may be combined with common linear polarizers in order to produce spatially varying achromatic polarizers and, or analyzers. A spatially-varying achromatic polarizer or analyzer can be manufactured by laminating a polarizer element onto a spatially varying waveplate element or by fabricating the spatially varying waveplate element directly on a polarizer element. When the incoming light is made to impinge on the polarizer element first an on the waveplate element second, an inhomogeneous polarizer is obtained. When the light is made to first impinge on the spatially varying achromatic waveplate and second on the polarizer, an inhomogeneous analyzer is obtained.

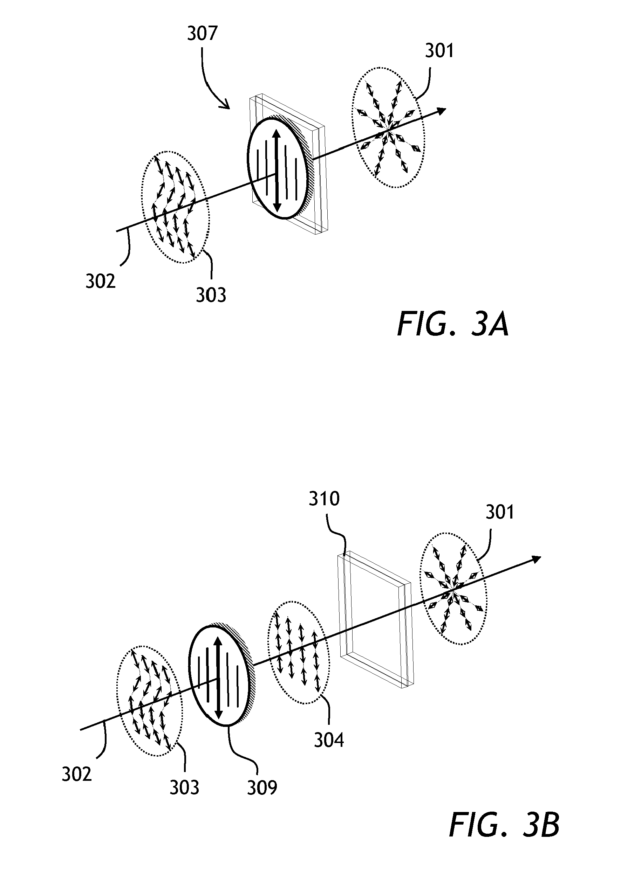

Turning now to FIGS. 3A and 3B, an example of such an inhomogeneous polarizer 307 is shown. A radial polarization vortex 301 is obtained by passing a polychromatic beam 302 having a distribution of polarization 303 through the inhomogeneous polarizer 307 converting the spatial distribution of polarization. The distribution 303 is a distorted uniform distribution of polarization, which has been distorted, for example, due to presence of polarization aberrations in an optical system, not shown. As seen in the exploded view of FIG. 3B, the achromatic polarizing converter, or inhomogeneous polarizer 307 is comprised of a linear polarizer 309, which transforms the non-uniform distribution 303 into a uniform distribution 304, and an achromatic polarization converter 310, which is analogous to the converter 207 of FIG. 2B. Importantly and advantageously, the performance of the achromatic polarizing converter 307 is independent on distortions of local polarization distribution, due to presence of the polarizer 309. A wire-grid polarizer, a polarization beam splitter, a dichroic polarizer, a cholesteric polarizer, a prism polarizer, a Brewster-angle polarizer, or an interference polarizer can be used as the polarizer 309.

When simultaneous polarizer and analyzer performance is required, one needs to combine the polarizer element 309 with two spatially varying waveplate elements, not shown, wherein the light first impinges on a first spatially varying waveplate element, then on the polarizer element 309, then on a second spatially varying waveplate element. The polarizer element can be selected from: a wire-grid polarizer; a polarization beam splitter; a dichroic polarizer; a cholesteric polarizer; a prism polarizer; a Brewster-angle polarizer; and an interference polarizer.

The birefringent layers comprising the achromatic converters 206 and 207 of FIGS. 2A and 2B, respectively, and the converter 310 of FIG. 3B, are preferably photo-aligned liquid crystal layers formed by photo-alignment of a linearly-polarizable photopolymer layer followed by coating said layer with a layer of crosslinkable liquid crystal (LC) material and UV-crosslinking the coated LC layer. A particular distribution of angles of alignment is obtained by varying the polarization axis of a linearly polarized UV light used to polymerize the photopolymer layer in the photo-alignment step. Advantageously, multiple layers can be deposited one on top of another, so that a multi-layer structure comprising two or more birefringent layers with space-varying polarization axis orientation can be formed on a single substrate. Alternatively, a thin and uniform LC fluid layer can be aligned by a photo-aligned linearly photo-polymerizable alignment layer. Or, a photopolymerizable polymer can be mixed with an LC fluid and spread in a form of a thin layer. Then, the polymer is photopolymerized, forming a network of polymerized threads throughout the volume of the layer. The LC fluid fills the gaps in the network and is aligned by the network according to an alignment pattern of the network of polymerized threads. In these two latter cases, however, multiple substrates will be required to build an achromatic polarization converter.

As noted, the birefringent layers comprising polarization converters of the present invention can be comprised of a photo-aligned polymerizable photopolymer, wherein the direction of the local axis of birefringence of the layers continuously varies, according to a variation of direction of alignment of the photo-aligned photopolymer. The invention can utilize an alignment layer comprising a layer of such linearly polymerizable photopolymer, or a buffed polymer layer with a varying buffing direction, or a self-assembled layer, or an obliquely deposited alignment layer with a varying deposition angle. The spatial patterning may involve the use of multiple linearly-polarized ultraviolet (LPUV) exposures through photomasks and, or the use of synchronized relative translations or rotations of a substrate, LPUV orientation, and photomasks. The novelty of the present invention is in the use of spatially varying photo-alignment for multiple liquid crystal layers so that the layers form a spatially varying polarization converter or waveplate having achromatic performance. The use of LCP retarder layers in this invention offers a flexibility allowing one to build an optical polarization converter for converting a given spatially-varying input polarization state into a desired spatially-varying output polarization state. Moreover, the band of achromatic performance can be adjusted by optimization of nominal design parameters, as will be described in the forthcoming sections.

The spatially varying waveplates, or polarization converters, of the present invention may be prepared on any substrate suitable for the wavelength range of interest, including glasses, transparent polymers, quartz, silicon, sapphire, etc. The waveplate structure may have other optical coatings incorporated such as reflectors, anti-reflectors, and absorbers. The waveplate may have other functional coatings, materials, or substrates incorporated such as moisture barriers, oxygen scavengers, and adhesives. The waveplate may be laminated to other substrates and, or waveplates. The individual layers of the spatially varying polarization converters may be stacked on top of one another, or may be made separately and then placed in series without direct contact between the layers. In the latter case, the gaps in between the layers may be filled with air, adhesive, other substrates, other optical coatings, other optical materials, or other functional materials.

The selection of the optical axes angle distribution of the birefringent layers will now be described in detail. In addition to the abovementioned compound waveplate reference by Koester, the following prior-art compound waveplate articles are relevant for the forthcoming discussion: an article by Title "Improvement of birefringent filters. 2: Achromatic waveplates", Applied Optics, Vol. 14, p. 229-237 (1975), which describes achromatic combinations of 3- and 9-layer waveplates, and solves the parameters analytically for a generalized retardance level; an article by Title et al., "Achromatic retardation plates", SPIE Vol.308: Polarizers and Applications p. 120-125 (1981), which gives a brief overview of various techniques for building achromatic retardation elements and identifies some particularly useful designs: 3-layer HWP, 3-layer Pancharatnam quarter-wave plate (QWP), and 4-layer Harris McIntyre QWP; an article by Pancharatnam "Achromatic combinations of birefringent plates, Part I: An achromatic circular polarizer," Indian Academy Science Proceed. Vol. 41, p. 130-136 (1955), which describes an achromatic circular polarizer comprising a linear polarizer and a specific 3-layer combination of birefringent plates; an article by Pancharatnam "Achromatic combinations of birefringent plates, Part II: An achromatic quarter-wave plate", Indian Academy Science Proceed. Vol. 41, p. 137-144 (1955), which describes an achromatic variable retarder having a rotatable HWP placed between two QWPs at a certain angle; and an article by McIntyre et al. "Achromatic wave plates for the visible spectrum," J. Opt. Soc. Of America Vol. 58(12), p.1575-1580 (1968), which describes 6 and 10-layer AQWP designs. All these articles are incorporated herein by reference.

In the forthcoming sections, the following notations are used: $\Delta\varphi = \Delta\varphi(x,y) = \varphi_{out}(x,y) - \varphi_{in}(x,y)$ is a difference of local azimuthal angles of local polarization axes between the azimuthal angle of the output linear polarization distribution $\varphi_{out}(x,y)$ and the azimuthal angle $\varphi_{in}(x,y)$ of the input linear polarization distribution; $\Gamma_i$ and $\theta_i(x,y)$ are the retardance and the azimuthal angle of local optical axis of an $i^{th}$ birefringent layer, respectively. Note that $\Gamma_i$ is considered constant across the $i^{th}$ birefringent layer.

*Calculation of polarization conversion efficiency*

The parameter of polarization conversion efficiency (PCE) is introduced herein to measure the degree of transformation of the input linear polarization distribution $\varphi_{in}(x,y)$ into the output linear polarization distribution $\varphi_{out}(x, y)$. It is defined as $P_{out}/P_{in}$, wherein $P_{out}$ is the optical power of a fraction of a beam having the sought-for linear polarization

distribution $\varphi_{out}(x,y)$ at the output of the polarization converter, and $P_{in}$ is the optical power of a fraction of a beam having the pre-determined incoming linear polarization distribution $\varphi_{in}(x,y)$ at the input of the polarization converter. For simplicity, $P_{in}$ = 1. A hypothetical space-variant linear analyzer oriented at $\varphi_{out}(x,y)$ can be used to facilitate computation of PCE at each $(x,y,\lambda)$ according to the following formula:

$$PCE(x,y,\lambda) = P_{out}(x,y,\lambda) = \frac{M_{analyzer}(x,y,\lambda) \cdot M_{converter}(x,y,\lambda) \cdot S_{in}(x,y,\lambda)}{[1 \quad \cos(2\varphi_{out}(x,y)) \quad \sin(2\varphi_{out}(x,y)) \quad 0]'} \tag{1}$$

where

$$M_{analyzer}(x,y,\lambda) = 0.5 \cdot \begin{vmatrix} 1 & a & b & 0 \\ a & a^2 & ab & 0 \\ b & ab & b^2 & 0 \\ 0 & 0 & 0 & 0 \end{vmatrix}, \tag{2}$$

wherein $a = \cos(2\varphi_{out}(x,y))$; $b = \sin(2\varphi_{out}(x,y))$;

$$M_{converter}(x,y,\lambda) = M_{layer1}(x,y,\lambda) \cdot M_{layer2}(x,y,\lambda) \cdot ... \cdot M_{layerN}(x,y,\lambda), \tag{3}$$

wherein $M_{layeri}(x,y,\lambda)$ is a Mueller matrix of a $i^{th}$ layer of the polarization converter stack, where the order of propagation is from layer N to layer 1, and

$$S_{in}(x,y,\lambda) = \begin{vmatrix} 1 \\ \cos(2\varphi_{in}(x,y)) \\ \sin(2\varphi_{in}(x,y)) \\ 0 \end{vmatrix} \tag{4}$$

*Two-layer achromatic linear polarization rotator for $\Delta\varphi = \pm\pi/2$ (90° or -90°)*

A basic achromatic HWP, or an achromatic rotator as described by Koester, is composed of two retarder layers selected to optimize azimuthal rotation of a linear polarization state over an range of wavelengths for a $\Delta\varphi = \pm\pi/2$ (90° or -90°). The parameters of this waveplate are $\Gamma_{1,non}$, $\theta_1$, $\Gamma_{2,nom}$, and $\theta_2$. The angles $\theta_1$ and $\theta_2$ are relative to any arbitrary input linear polarization orientation. The retardances $\Gamma_{1,non}$, $\Gamma_{2,nom}$ of the layers 1 and 2 are nominally equal to each other and are half-wave retardances at some design wavelength $\lambda_{nom}$, which is chosen based on the desired band of achromaticity and the dispersion profile of the birefringent material used. For the purposes of the following explanation and examples, retardance values will be chosen based upon the material called ROF5151 LCP from Rolic Research Ltd., located at Gewerbestrasse 18, CH-4123 Allschwil, Switzerland. The material ROF5151 LCP has a certain known dispersion profile $\Delta n(\lambda)$. The optical axis orientations of the two layers are chosen such that their azimuthal orientations are $\theta_1 = \frac{3}{4} \cdot \Delta\varphi - \delta$ and $\theta_2 = \frac{1}{4} \cdot \Delta\varphi - \delta$ relative to the input polarization state orientation $\varphi_{in}$. The angle $\delta$ is a small modifier angle, which is specifically optimized according to the desired range of achromatic performance for a given rotation $\Delta\varphi$. Thus for a $\Delta\varphi = \pi/2$ rotation from $\varphi_{in} = 0$ to $\varphi_{out} = \pi/2$, the optical axis orientations are $\theta_1 = 3\pi/8 - \delta$, or 67.5°- $\delta$, and $\theta_2 = \pi/8 + \delta$, or 22.5° + $\delta$. In this example, choosing $\delta = 0$ will result in an exact $\Delta\varphi = \pi/2$ (90°) rotation of the polarization state at the design wavelength, and nearly $\pi/2$ rotation with close to 100% PCE for a moderate band of wavelengths around the design wavelength (band shape is skewed toward longer wavelengths). This results in a band of relatively high PCE over $\lambda = 420 \sim 680$nm, with a nearly perfect conversion at $\lambda_{nom} = 502$nm and a very good conversion at $475 \sim 550$nm. However, the value of $\delta$ can be adjusted to increase/decrease the achromatic bandwidth at the expense of some reduction in efficiency at the nominal wavelength $\lambda_{nom}$. For example, by choosing $\delta = 2°$, the range of achromatic conversion widens, but the level of PCE is somewhat reduced within that range.

*Two-layer achromatic converter of linear polarization distribution for arbitrary $\Delta\varphi(x,y)$*

This particular embodiment of a polarization converter for achromatically rotating an input linear polarization distribution $\varphi_{in}(x,y)$ by the amount $\Delta\varphi(x,y)$, with the resulting spectral bandwidth of PCE being substantially the same for any $\Delta\varphi$ and the magnitude of PCE being not smaller than for the specific case $\Delta\varphi = \pi/2$ considered in the previous section, consists of two birefringent layers having retardation $\Gamma_{nom} = \lambda_{nom}/2$ and a distribution of the angles of local optical axes $\theta_1$ and $\theta_2$ defined as follows:

$$\theta_1(\Delta\varphi, \varphi_{in}) = \begin{cases} \varphi_{in} + \Delta\varphi(a - \dfrac{\delta}{\pi/2}) & for \quad |\Delta\varphi| \le \dfrac{\pi}{2} \\ \varphi_{in} + \dfrac{\Delta\varphi}{|\Delta\varphi|}[\dfrac{\pi}{2}(a - \dfrac{\delta}{\pi/2}) + (|\Delta\varphi| - \dfrac{\pi}{2})(a + \dfrac{\delta}{\pi/2})] & for \quad \dfrac{\pi}{2} < \Delta\varphi \le \pi \end{cases} \quad (5)$$

$$\theta_2(\Delta\varphi, \varphi_{in}) = \begin{cases} \varphi_{in} + \Delta\varphi(b + \dfrac{\delta}{\pi/2}) & for \quad |\Delta\varphi| \le \dfrac{\pi}{2} \\ \varphi_{in} + \dfrac{\Delta\varphi}{|\Delta\varphi|}[\dfrac{\pi}{2}(b + \dfrac{\delta}{\pi/2}) + (|\Delta\varphi| - \dfrac{\pi}{2})(b - \dfrac{\delta}{\pi/2})] & for \quad \dfrac{\pi}{2} < |\Delta\varphi| \le \pi \end{cases} \quad (6)$$

wherein $a$ = ¾, $b$ = ¼, and $\delta$ is fixed at an optimal value selected so as to produce the desired range of achromaticity and level of polarization conversion for a rotation of $\Delta\varphi = \pi/2$. It has been found that at $\delta \sim 2.0°$ a high PCE over much of the visible wavelength range is achieved; however the values of $0° \le \delta \le 6°$ can be used.

If the angles $\varphi_{in}$, $\varphi_{out}$, $\theta_1$, and $\theta_2$ are constrained to only two quadrants, that is, from -π/2 to π/2 for quadrants I, IV; or from 0 to π, i.e. quadrants I, II, then the range of unique values of $\Delta\varphi$ is π, is constrained to include 0, and preferably contains one of the following convenient intervals: -π/2 to π/2, which permits equal positive and negative azimuthal rotations; 0 to π, which permits positive only rotations; and -π to 0, which permits only negative azimuthal rotations.

If the angles $\varphi_{in}$, $\varphi_{out}$, $\theta_1$, and $\theta_2$ are defined in all four quadrants, that is, -π to π for quadrants I~IV, then the range of unique values of $\Delta\varphi$ is 2π and is constrained to -π to π. This permits equal positive and negative rotations of up to ±π.

While the two-quadrant and the four-quadrant definition of azimuthal angles yield substantially similar end result in terms of PCE at any given location $(x,y)$, the spatially varying angles $\theta_1(x,y)$ and $\theta_2(x,y)$ will differ between the cases of two-quadrant and four-quadrant definitions. This is due to the fact that for each angle of the 2-quardant system, the 4-quadrant system provides two solutions of $\theta_1(x,y)$ and $\theta_2(x,y)$. Either way of defining will work with the present invention; however, each one has unique advantages and disadvantages. The two-quadrant definitions are simpler, but there are certain spatial discontinuities of $\theta_1(x,y)$ and $\theta_2(x,y)$ that can arise at locations where $\Delta\varphi$ abruptly changes to the opposite end of the interval over which it is defined. On the other hand, if the four-quadrant definitions are used, there are less chances that such discontinuities will occur, but the specification of the desired input/output linear polarization orientations of the birefringent layers can become more complicated.

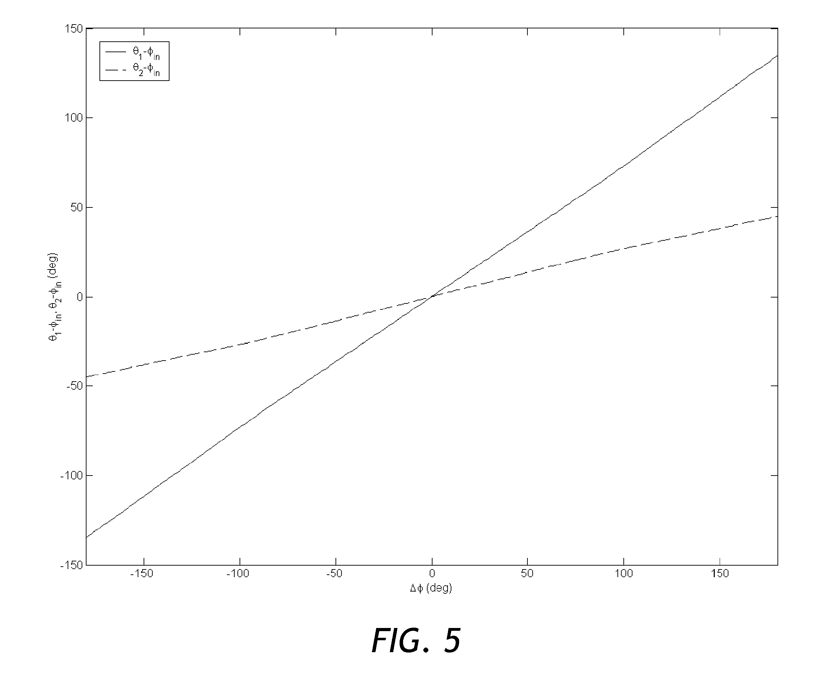

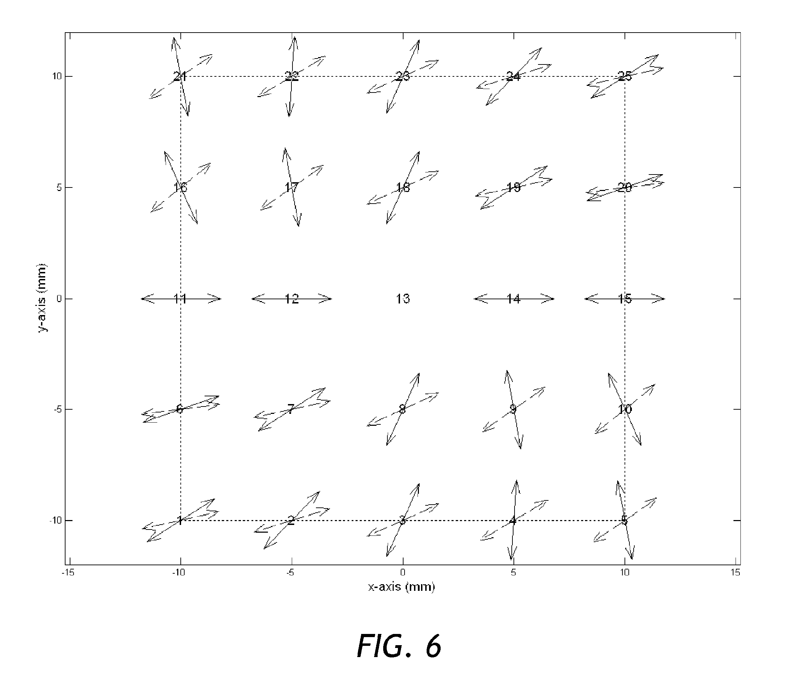

Specific examples of utilizing formulas (5) and (6) will now be given. Turning to FIG. 4, plots of input and output lateral distributions of polarization are depicted, wherein said plots correspond to a horizontally polarized input polarization distribution $\varphi_{in}(x,y)$ = 0 shown as solid arrows, and radial polarization vortex output polarization distribution $\varphi_{out}(x,y)$ shown as dashed arrows, respectively. This distribution is used in calculations the results of which are shown in FIG. 5, wherein the angles $\theta_1$ and $\theta_2$ are plotted as a function of $\Delta\varphi$. The angles $\theta_1$ and $\theta_2$ are calculated by using formulas (5) and (6) and two-quadrant angle definitions as explained above. The angles dependence on $\Delta\varphi$ appears to be linear, however, a small deviation from linearity is actually present due to a non-zero value of $\delta$ = 2.0°. FIG. 6 shows orientations of the local optical axes vs. x- and y- position, at 25 points in a 20x20mm two-layer achromatic polarization converter with local optical axes oriented according to (5) and (6). The optical axes of the first and second layers are shown with solid and dashed arrows, respectively.

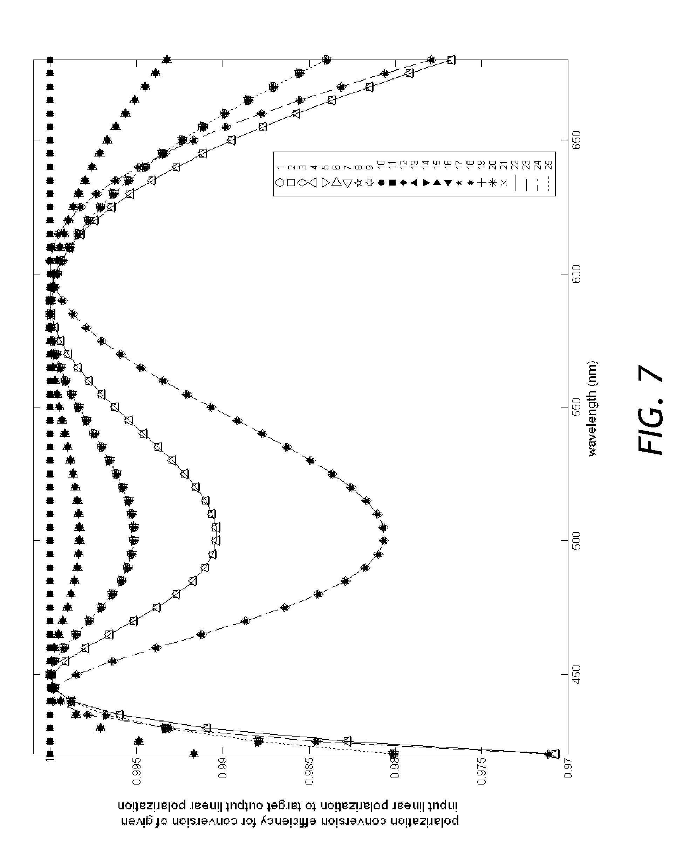

Turning now to FIG. 7, a wavelength dependence of PCE of the waveplate of FIG. 6 is shown. Depending on location of a particular calculation point 1...25 shown in FIG. 6, the minimal PCE plotted in FIG. 7 varies from 97% to almost 100%. Note that PCE of 100% corresponds to 1.0 on the PCE plots. It is recognized by those skilled in the art that in actual devices, the PCE can be somewhat lower, for example 95% or even 90%.

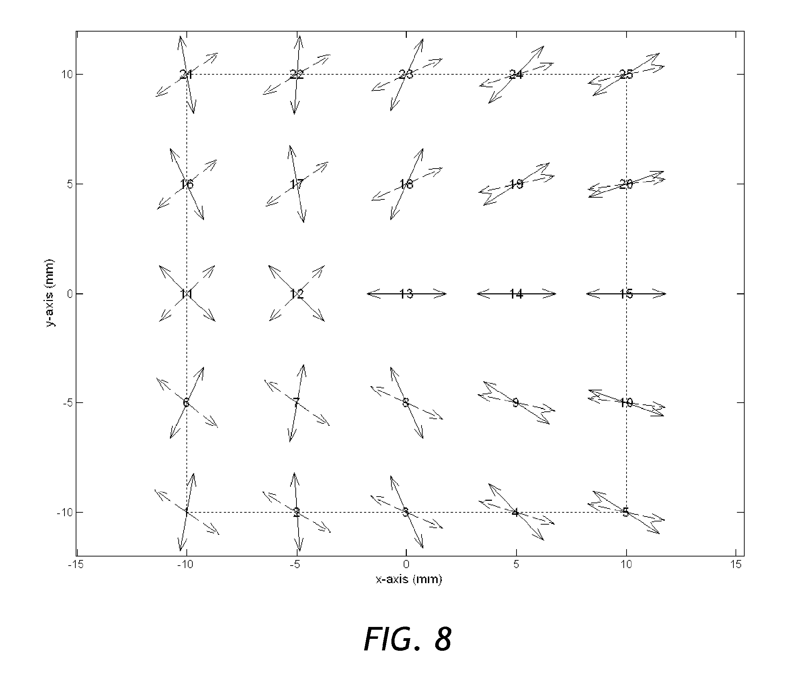

Referring now to FIG. 8, orientations of local optical axes of layers vs. x- and y-position in a 20x20mm two-layer achromatic polarization converter are shown with local optical axes oriented according to (5) and (6) and a four-quadrant angle definitions. The optical axes of the first and second layers are shown with solid and dashed arrows, respectively. One can immediately see by comparing FIG. 8 to FIG. 6, that, even though the same formulas were used in both cases, the different angle definition results in different local optical axes angle values of the birefringent layers.

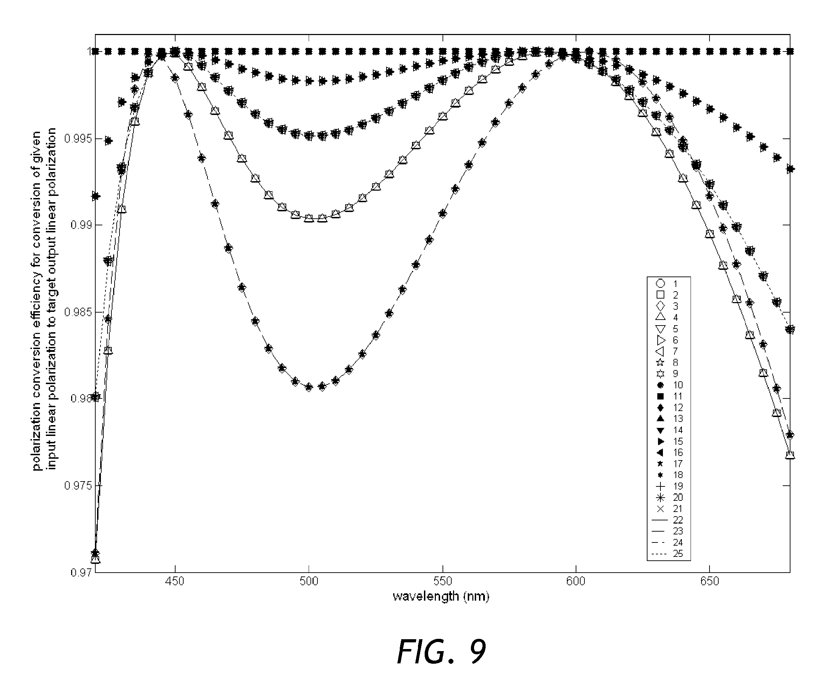

Turning now to FIG. 9, a wavelength dependence of PCE is shown of the waveplate of FIG. 8. Depending on location of a particular calculation point 1...25 shown in FIG. 8, the minimal PCE plotted in FIG. 9 varies from 97% to almost 100%. The PCE spectrum is very similar to the one plotted in FIG. 7.

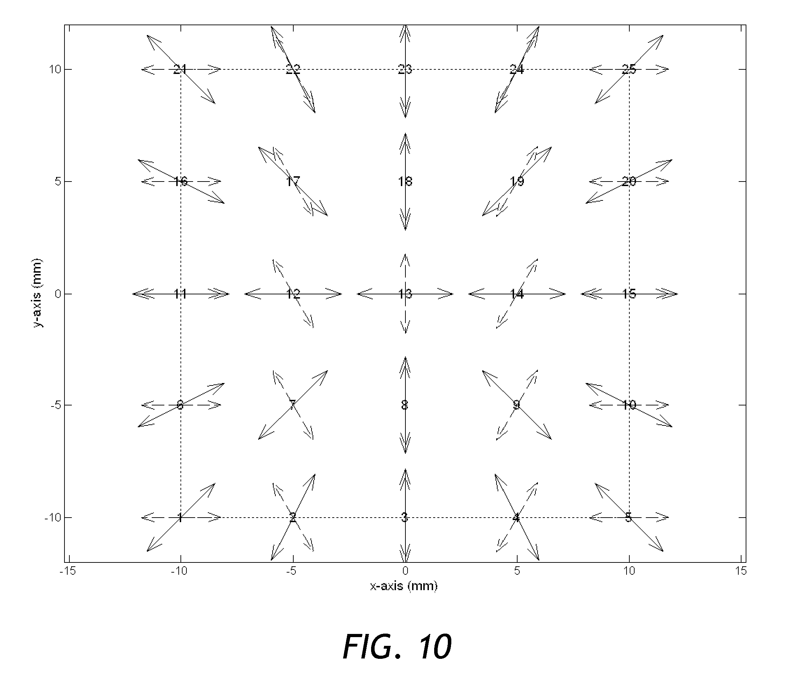

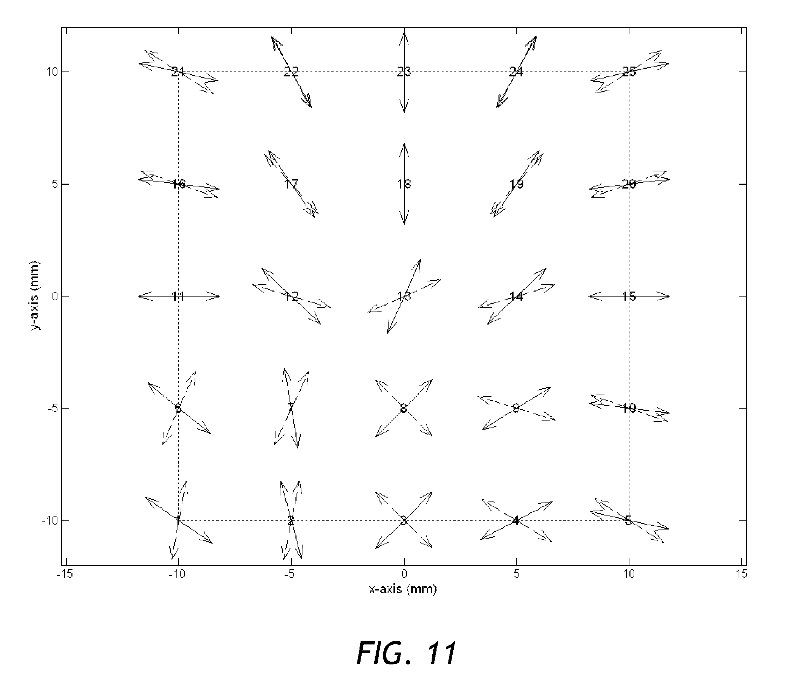

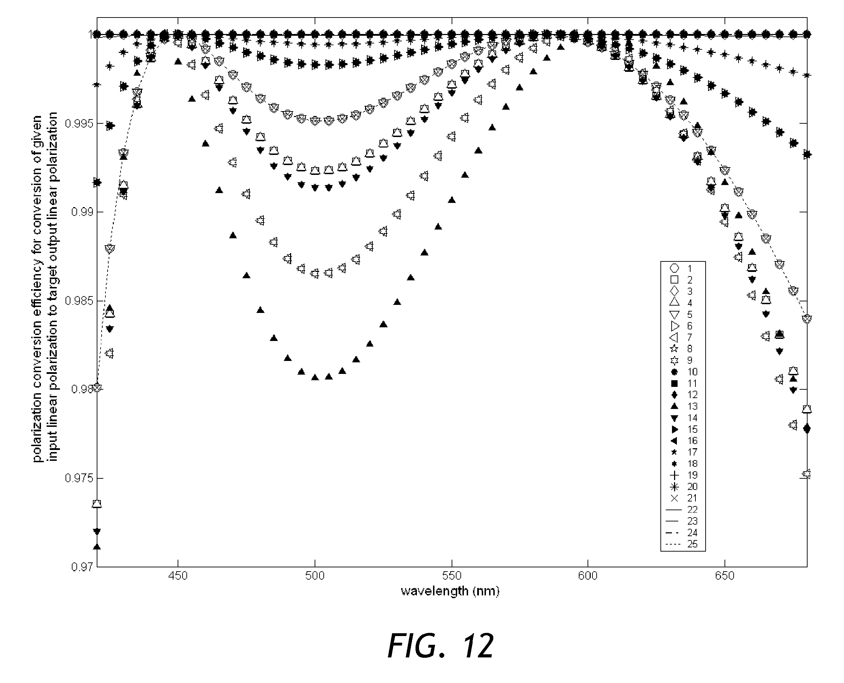

Referring now to FIG. 10, a plot of input and output lateral distributions of polarization is shown, wherein the distributions correspond to a radially polarized input polarization distribution $\varphi_{in}(x,y)$ and an output polarization distribution $\varphi_{out}(x,y)$ that is periodically varying along $x$-axis and is symmetrical around $y$-axis. The first distribution, $\varphi_{in}(x,y)$, is shown as solid arrows, and the second distribution, $\varphi_{out}(x,y)$, is shown as dashed arrows. These distributions are used in calculations the results of which are shown in FIGS. 11 and 12. In FIG. 11, a map of directions of the local optical axes of layers in the two-layer achromatic polarization converter constructed according to the formulas (5) and (6) is shown. The optical axes of the first and second layers are shown with solid and dashed arrows, respectively. In FIG. 12, the resulting wavelength dependence of PCE is presented. Depending on location of a particular calculation point 1...25 shown in FIG. 11, the minimal PCE plotted in FIG. 12 varies from 97% to almost 100%.

*Three-layer achromatic converter of linear polarization distribution for arbitrary $\Delta\varphi(x,y)$*

The formalism developed for the two-layer polarization converter may be extended to a higher number of layers with the purpose of further improving the wavelength range of achromatic performance and overall PCE. With addition of more layers, the equations governing the distributions of optical axes orientations of the layers differ from the equations (5) and (6) describing the two-layer system. For a three-layer system, a variety of approaches exists for selection of appropriate optical axis angles $\theta_1$, $\theta_2$, and $\theta_3$ as a function of $\Delta\varphi$ and $\varphi_{in}$. Below, five of these approaches are described, termed as *Embodiment A*, *Embodiment B*, *Embodiment C*, *Embodiment D*, and *Embodiment E*.

*Embodiment A*

This particular embodiment of a polarization converter for achromatically rotating an input linear polarization distribution $\varphi_{in}(x,y)$ by the amount $\Delta\varphi(x,y)$, with the resulting spectral bandwidth of PCE being substantially the same for any $\Delta\varphi$, and the magnitude of PCE being not smaller than for the specific case $\Delta\varphi = \pi/2$ considered earlier, consists of three birefringent layers having retardation $\Gamma_{nom} = \lambda_{nom}/2$ and a distribution of the angles of local optical axes $\theta_1$, $\theta_2$, and $\theta_3$ defined as follows:

$$\theta_1(\Delta\varphi,\varphi_{in}) = \begin{cases} \varphi_{in} + \Delta\varphi(a - \dfrac{\delta}{\pi/2}) & for & |\Delta\varphi| \le \dfrac{\pi}{2} \\[2mm] \varphi_{in} + \dfrac{\Delta\varphi}{|\Delta\varphi|}[\dfrac{\pi}{2}(a - \dfrac{\delta}{\pi/2}) + (|\Delta\varphi| - \dfrac{\pi}{2})(a + \dfrac{\delta}{\pi/2})] & for & \dfrac{\pi}{2} < |\Delta\varphi| \le \pi \end{cases} \tag{7}$$

$$\theta_2(\Delta\varphi,\varphi_{in}) = \varphi_{in} + b\Delta\varphi \tag{8}$$

$$\theta_3(\Delta\varphi,\varphi_{in}) = \begin{cases} \varphi_{in} + \Delta\varphi(c + \dfrac{\delta}{\pi/2}) & for & |\Delta\varphi| \le \dfrac{\pi}{2} \\[2mm] \varphi_{in} + \dfrac{\Delta\varphi}{|\Delta\varphi|}[\dfrac{\pi}{2}(c + \dfrac{\delta}{\pi/2}) + (|\Delta\varphi| - \dfrac{\pi}{2})(c - \dfrac{\delta}{\pi/2})] & for & \dfrac{\pi}{2} < |\Delta\varphi| \le \pi \end{cases} \tag{9}$$

wherein $a$ = 7/8, $b$ = 1/2, $c$ = 1/8, and $\delta$ is a modifier angle that is adjusted produce the desired range of achromaticity and the level of polarization conversion for $\Delta\varphi = \pi/2$. An optimized value of $\delta$ of 1.5°~2.0° allows one to achieve a high degree of polarization conversion over most of the visible spectrum; however the values of $0° \le \delta \le 6°$ can be used, with resulting performance being reasonably good.

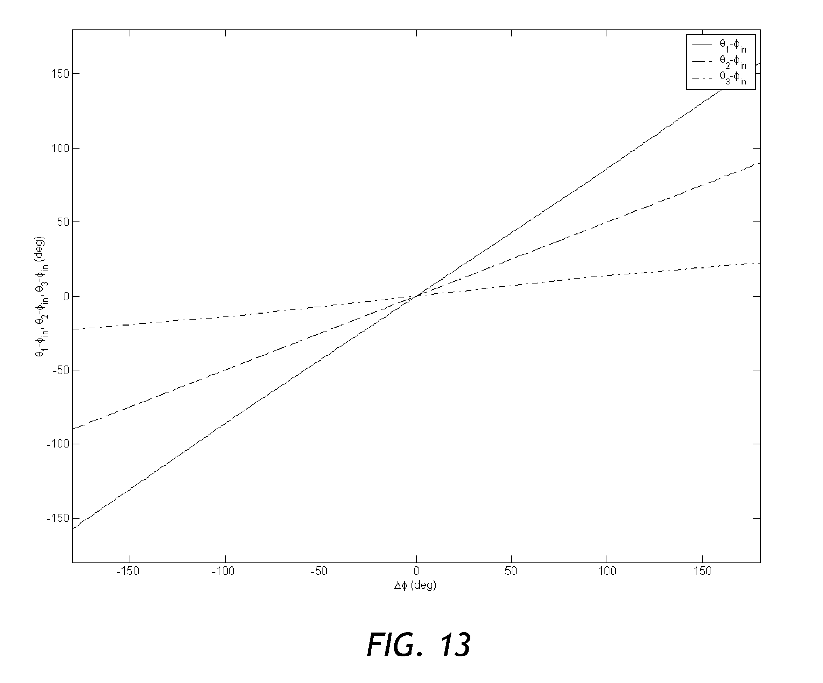

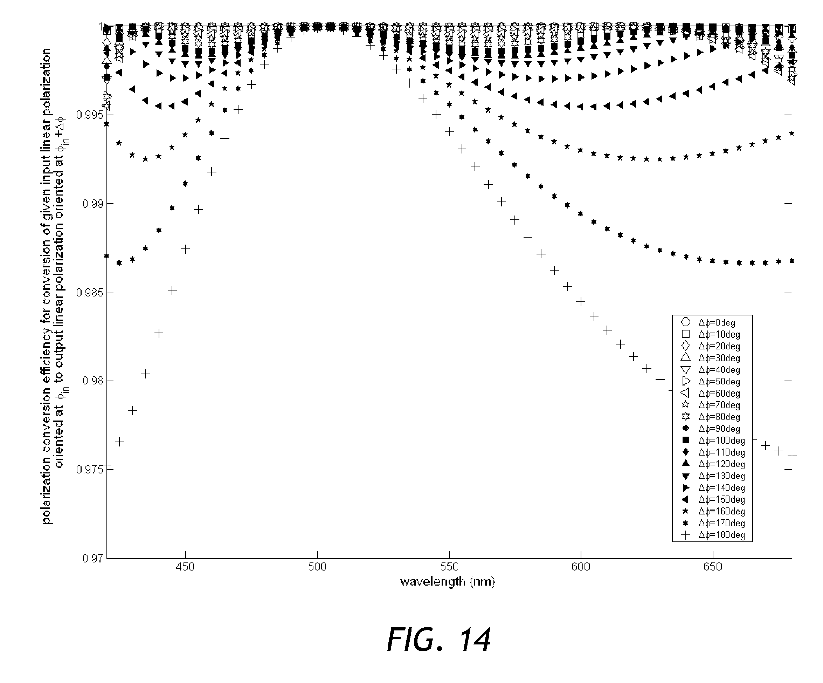

Turning now to FIG. 13, the angles $\theta_1$, $\theta_2$, and $\theta_3$ are plotted as a function of $\Delta\varphi$. The angles $\theta_1$, $\theta_2$, and $\theta_3$ are calculated by using formulas (7) to (9). The angles dependence on $\Delta\varphi$ appears to be linear in FIG. 13, however, a small deviation from linearity is actually present due to a non-zero value of $\delta = 1.5°$. Referring now to FIG. 14, a wavelength dependence of PCE is shown for optical axes angles according to FIG. 13 corresponding to certain $\Delta\varphi$ values 0, 10, 20,...180°. Depending on the value of $\Delta\varphi$, the minimal PCE plotted in FIG. 14 varies from 97% to almost 100%. Even though the minimal PCE is not improved in this embodiment as compared to the two-layer converter considered above, the three-layer converter having the optical axes distribution governed by equations (7) to (9) improves an average PCE.

The formulas (7) to (9) represent an improvement upon what was taught by Koester, who suggested that the modifier parameter $\delta$ be manually adjusted for each value of $\Delta\varphi$. In the present invention, a functional dependence of the angles $\theta_1$, $\theta_2$, and $\theta_3$ on $\Delta\varphi$ is disclosed, wherein a single modifier parameter $\delta$ is used, which considerably simplifies the computations. Also, it is disclosed herein that the functional dependence of $\theta_1$ and $\theta_3$ differs for $|\Delta\varphi|\leq\pi/2$ and $\pi/2<|\Delta\varphi|\leq\pi$.

*Embodiment B*

The *Embodiment B* is an improvement of the *Embodiment A* considered above, particularly for $7\pi/8 < |\Delta\varphi|\leq\pi$ This embodiment of a polarization converter for achromatically rotating an input linear polarization distribution $\varphi_{in}(x,y)$ by the amount $\Delta\varphi(x,y)$, with the resulting spectral bandwidth of PCE being substantially the same for any $\Delta\varphi$ and the magnitude of PCE being not smaller than for the specific case $\Delta\varphi = \pi/2$ considered earlier, consists of three birefringent layers having retardation $\Gamma_{nom} = \lambda_{nom}/2$ and a distribution of the angles of local optical axes $\theta_1$, $\theta_2$, and $\theta_3$ defined in the same way as in (7), (8), and (9), respectively. However, the parameters $a$ and $c$ are defined differently:

$$a = \begin{cases} \dfrac{7}{8} & for \quad |\Delta\varphi| \leq \dfrac{7\pi}{8} \\[2ex] \dfrac{|\Delta\varphi|}{\pi} & for \quad \dfrac{7\pi}{8} < |\Delta\varphi| \leq \pi \end{cases} \tag{10}$$

$$\boldsymbol{b} = \tfrac{1}{2} \tag{11}$$

$$c = \begin{cases} \dfrac{1}{8} & for \quad |\Delta\varphi| \leq \dfrac{7\pi}{8} \\[2ex] 1 - \dfrac{|\Delta\varphi|}{\pi} & for \quad \dfrac{7\pi}{8} < |\Delta\varphi| \leq \pi \end{cases} \tag{12}$$

An optimized value of $\delta$ of 1.5°~2.0° allows one to achieve a high degree of polarization conversion over most of the visible spectrum for $\Delta\varphi = \pi/2$; however the values of $0° \leq\delta\leq6°$ can still be used.

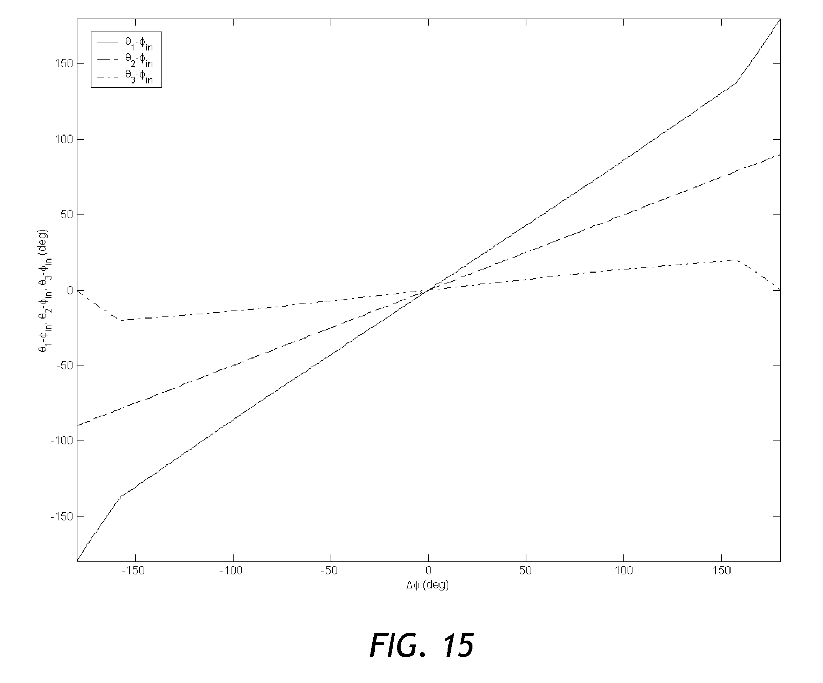

Turning now to FIG. 15, the angles $\theta_1$, $\theta_2$, and $\theta_3$ are plotted as a function of $\Delta\varphi$. The angles $\theta_1$, $\theta_2$, and $\theta_3$ are calculated by using formulas (7) to (12). The angles dependence on $\Delta\varphi$ is clearly non-linear in this case. The parameter $\delta$ is taken to be 1.5°.

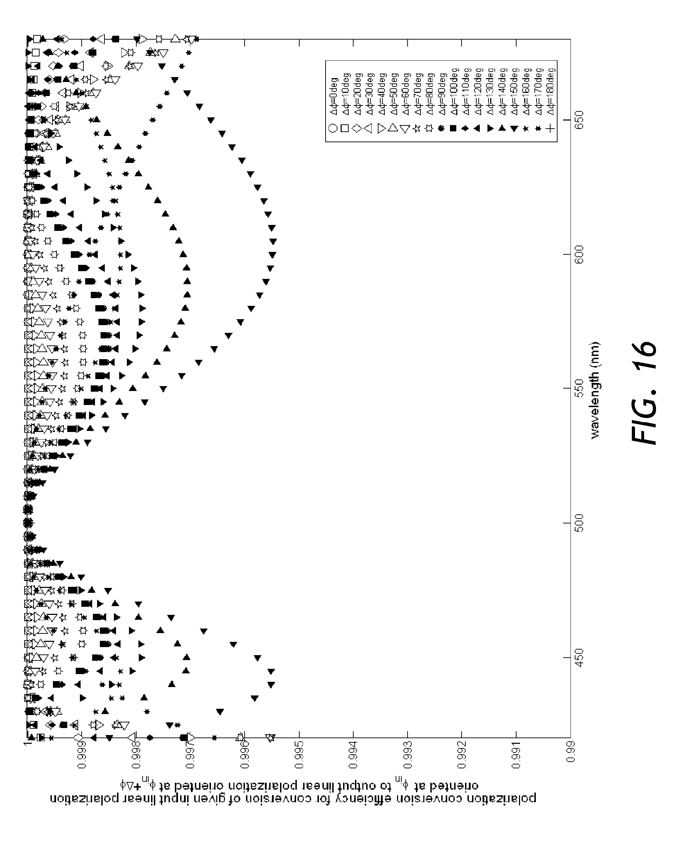

Referring to FIG. 16, a wavelength dependence of PCE is shown for optical axes angles according to FIG. 15 corresponding to the $\Delta\varphi$ values of 0, 10, 20,...180°. Depending on a particular $\Delta\varphi$ value, the minimal PCE plotted in FIG. 16 varies from 99.5% to almost 100%. One can see that, with improved parameters $a, b,$ and c given by formulae (10) to (12), a much higher PCE is achievable as compared to the case of a two-layer polarization converter and a three-layer polarization converter, *Embodiment A*. This is because in the *Embodiment B* presented herein, for $7\pi/8 < |\Delta\varphi| \leq \pi$, the parameters $a$ and $c$ vary from 7/8 to 1 and 1/8 to 0, respectively. This variation provides for a considerable improvement over *Embodiment A,* wherein the achromaticity progressively degrades for $7\pi/8 < |\Delta\varphi| \leq \pi$.

_Embodiment C_

This particular embodiment of a polarization converter for achromatically rotating an input linear polarization distribution $\varphi_{in}(x,y)$ by the amount $\Delta\varphi(x,y)$, with the resulting spectral bandwidth of PCE being substantially the same for any $\Delta\varphi$ and the magnitude of PCE being not smaller than for the specific case $\Delta\varphi = \pi/2$ considered earlier, consists of three birefringent layers having retardation $\Gamma_{nom} = \lambda_{nom}/2$ and a distribution of the angles of local optical axes $\theta_1$, $\theta_2$, and $\theta_3$ defined as follows:

$$\theta_1(\Delta\varphi,\varphi_{in}) = \begin{cases} \varphi_{in} + \Delta\varphi(a - \dfrac{\delta}{\pi/2}) & for & |\Delta\varphi| \leq \dfrac{\pi}{2} \\[2mm] \varphi_{in} + \dfrac{\Delta\varphi}{|\Delta\varphi|}[\dfrac{\pi}{2}(a-\dfrac{\delta}{\pi/2}) + (|\Delta\varphi| - \dfrac{\pi}{2})(a + \dfrac{\delta}{\pi/2})] & for & \dfrac{\pi}{2} < |\Delta\varphi| \leq \dfrac{7\pi}{8} \\[2mm] \varphi_{in} + \dfrac{\Delta\varphi}{|\Delta\varphi|}\dfrac{\theta_1(7\pi/8,0) + (|\Delta\varphi| - 7\pi/8)(\pi - \theta_1(7\pi/8,0))}{\pi/8} & for & \dfrac{7\pi}{8} < |\Delta\varphi| \leq \pi \end{cases} \quad (13)$$

$$\theta_2(\Delta\varphi,\varphi_{in}) = \varphi_{in} + b\Delta\varphi \qquad\qquad (14)$$

$$\theta_3(\Delta\varphi,\varphi_{in}) = \begin{cases} \varphi_{in} + \Delta\varphi(c + \dfrac{\delta}{\pi/2}) & for & |\Delta\varphi| \leq \dfrac{\pi}{2} \\[2mm] \varphi_{in} + \dfrac{\Delta\varphi}{|\Delta\varphi|}[\dfrac{\pi}{2}(c+\dfrac{\delta}{\pi/2}) + (|\Delta\varphi| - \dfrac{\pi}{2})(c - \dfrac{\delta}{\pi/2})] & for & \dfrac{\pi}{2} < |\Delta\varphi| \leq \dfrac{7\pi}{8} \\[2mm] \varphi_{in} + \dfrac{\Delta\varphi}{|\Delta\varphi|}\dfrac{\theta_3(7\pi/8,0) + (|\Delta\varphi| - 7\pi/8)(-\theta_3(7\pi/8,0))}{\pi/8} & for & \dfrac{7\pi}{8} < |\Delta\varphi| \leq \pi \end{cases} \quad (15)$$

wherein **a** = 7/8, **b** = 1/2, **c** = 1/8, and $\delta$ is a modifier angle that is adjusted produce the desired range of achromaticity and the level of polarization conversion over the most of the visible spectrum for $\Delta\varphi = \pi/2$. An optimized value of $\delta$ of 1.5°~2.0° allows one to achieve a high degree of polarization conversion over most of the visible spectrum. The values of $0° \leq \delta \leq 6°$ can be used to achieve reasonably good performance.

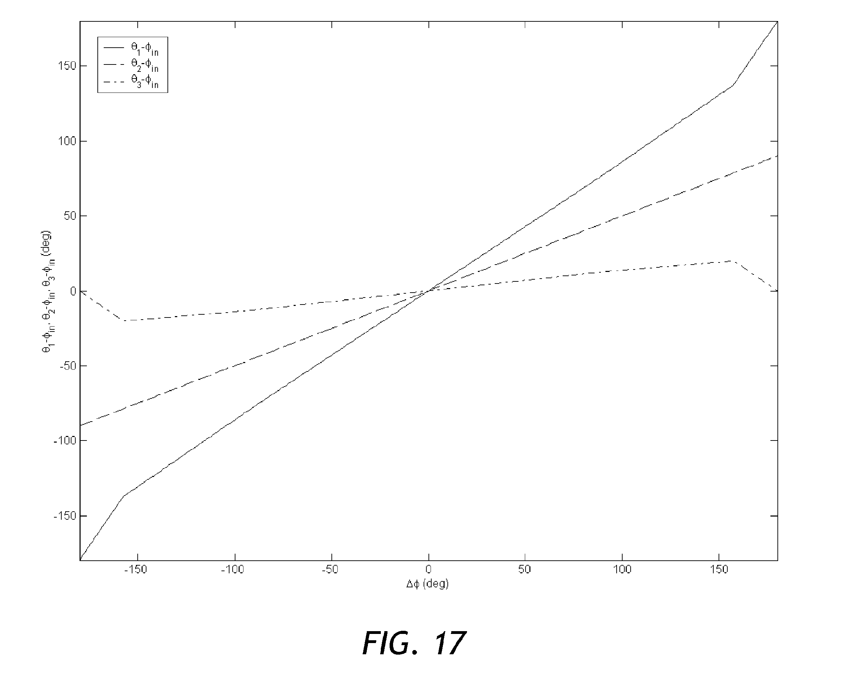

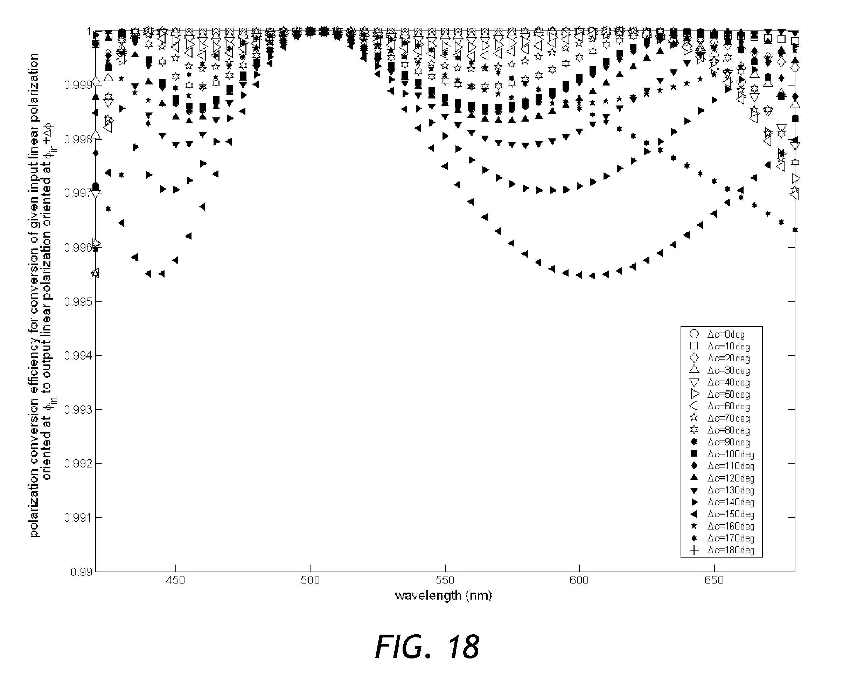

Turning now to FIG. 17, the angles $\theta_1$, $\theta_2$, and $\theta_3$ are plotted as a function of $\Delta\varphi$. The angles $\theta_1$, $\theta_2$, and $\theta_3$ are calculated from formulas (13) to (15). The dependence of the angles $\theta_1$, $\theta_2$, and $\theta_3$ on $\Delta\varphi$ is non-linear at $\delta = 1.5°$. Referring to FIG. 18, a wavelength dependence of PCE is shown for optical axes angles according to FIG. 17 corresponding to the $\Delta\varphi$ values of 0, 10, 20,...180°. Depending on a particular $\Delta\varphi$ value, the minimal PCE plotted in FIG. 18 varies from 99.5% to almost 100%. In the _Embodiment_ C presented herein, for $7\pi/8 < |\Delta\varphi| \leq \pi$, the angles $\theta_1$ and $\theta_3$ vary linearly from $\theta_1(7\pi/8,\varphi_{in})$ to $\pi$ and from $\theta_3(7\pi/8,\varphi_{in})$ to 0, respectively. This variation provides for an improvement upon _Embodiment A,_ wherein the achromaticity progressively degrades for $7\pi/8 < |\Delta\varphi| \leq \pi$.

_Embodiment D_

This particular embodiment of a polarization converter for achromatically rotating an input linear polarization distribution $\varphi_{in}(x,y)$ by the amount $\Delta\varphi(x,y)$, with the resulting spectral bandwidth of PCE being substantially the same for any $\Delta\varphi$ and the magnitude of PCE being not smaller than for the specific case $\Delta\varphi = \pi/2$ considered earlier, consists of three birefringent layers having retardation $\Gamma_{nom} = \lambda_{nom}/2$ and a distribution of the angles of local optical axes $\theta_1$, $\theta_2$, and $\theta_3$ defined as follows:

$$\theta_1(\Delta\varphi,\varphi_{in}) = \begin{cases} \varphi_{in} + \Delta\varphi(a - \dfrac{\delta}{\pi/2}) & for & |\Delta\varphi| \leq \dfrac{\pi}{2} \\ 2\theta_2 - \theta_3 & for & \dfrac{\pi}{2} < |\Delta\varphi| \leq \pi \end{cases} \tag{16}$$

$$\theta_2(\Delta\varphi,\varphi_{in}) = \varphi_{in} + b\Delta\varphi \tag{17}$$

$$\theta_3(\Delta\varphi,\varphi_{in}) = \begin{cases} \varphi_{in} + \Delta\varphi(c + \dfrac{\delta}{\pi/2}) & for & |\Delta\varphi| \leq \dfrac{\pi}{2} \\ \varphi_{in} + \dfrac{\Delta\varphi}{|\Delta\varphi|}\dfrac{\pi}{2}(c + \dfrac{\delta}{\pi/2}) & for & \dfrac{\pi}{2} < |\Delta\varphi| \leq \pi \end{cases} \tag{18}$$

wherein *a* = 5/6, *b* = 1/2, *c* = 1/6, and $\delta$ is a modifier angle that is adjusted produce the desired range of achromaticity and the level of polarization conversion over the most of the visible spectrum for $\Delta\varphi = \pi/2$. An optimized value of $\delta$ has been found to be -1.0°, at which value a high PCE is achieved over much of the visible spectrum. The values of $-4° \leq \delta \leq 0°$ can be used to achieve reasonably good performance.

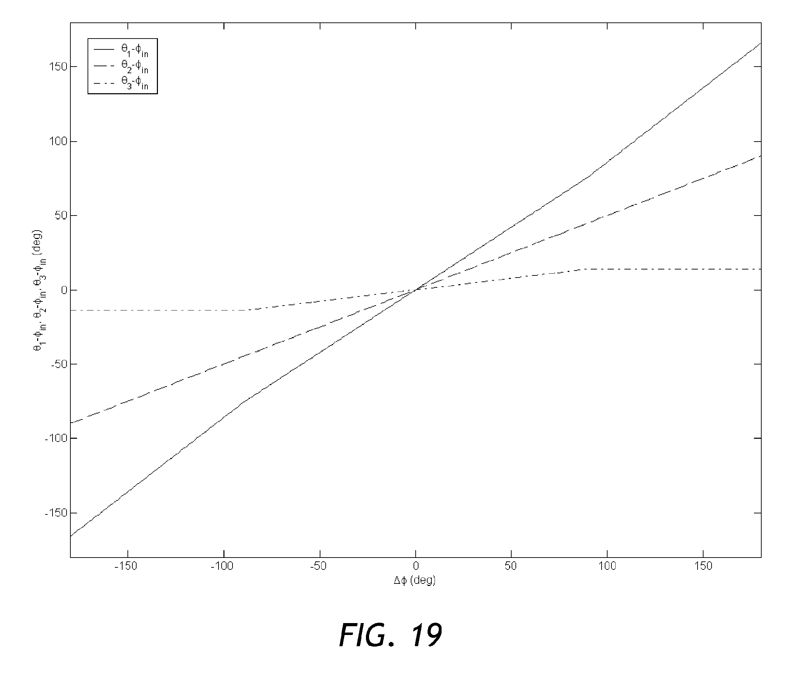

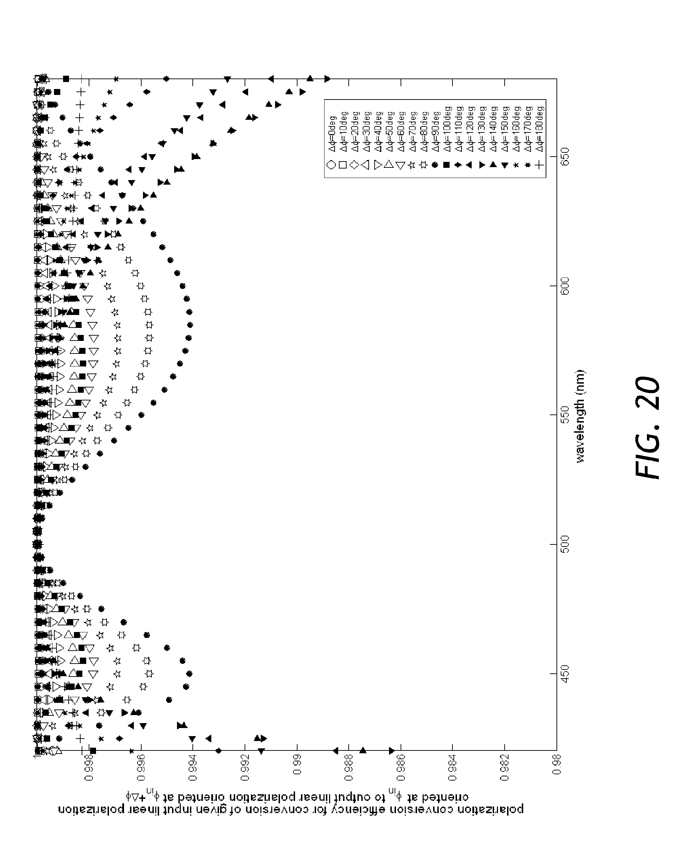

Turning now to FIG. 19, the angles $\theta_1$, $\theta_2$, and $\theta_3$ are plotted as a function of $\Delta\varphi$. The angles $\theta_1$, $\theta_2$, and $\theta_3$ are calculated by using formulas (16) to (18). The angles dependence on $\Delta\varphi$ is non-linear at $\delta = -1.0°$. Referring to FIG. 20, a wavelength dependence of PCE is shown for optical axes angles according to FIG. 19 corresponding to $\Delta\varphi$ values of 0, 10, 20,...180°. Depending on a particular $\Delta\varphi$ value, the minimal PCE plotted in FIG. 20 varies from 98.5% to almost 100%.

*Embodiment E*

This particular embodiment of a polarization converter for achromatically rotating an input linear polarization distribution $\varphi_{in}(x,y)$ by the amount $\Delta\varphi(x,y)$, with the resulting spectral bandwidth of PCE being substantially the same for any $\Delta\varphi$ and the magnitude of the PCE being not smaller than for the specific case $\Delta\varphi = \pi/2$ considered earlier, consists of three birefringent layers having retardation $\Gamma_{nom} = \lambda_{nom}/2$ and a distribution of the angles of local optical axes $\theta_1$, $\theta_2$, and $\theta_3$ defined as follows:

$$\theta_1(\Delta\varphi, \varphi_{in}) = \varphi_{in} + \Delta\varphi/2 - \pi/6 + \delta \tag{19}$$

$$\theta_2(\Delta\varphi, \varphi_{in}) = \varphi_{in} + \Delta\varphi/2 + \pi/6 - \delta \tag{20}$$

$$\theta_3(\Delta\varphi, \varphi_{in}) = \theta_1(\Delta\varphi, \varphi_{in}) \tag{21}$$

wherein $\delta$ is a modifier angle that is adjusted produce the desired range of achromaticity and the level of polarization conversion over the most of the visible spectrum for $\Delta\theta = \pi/2$. An optimized value of $\delta$ has been found to be 1.0°, at which value a high PCE is achieved over much of the visible spectrum, the values of $0° \leq \delta \leq 4°$ still being usable to achieve reasonably good performance.

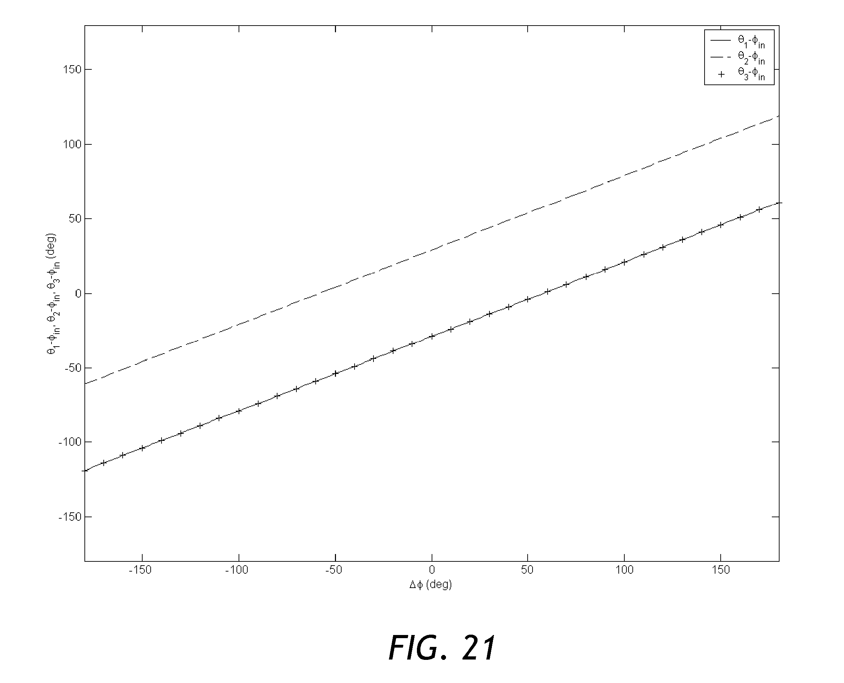

Referring now to FIG. 21, the angles $\theta_1$, $\theta_2$, and $\theta_3$ are plotted as a function of $\Delta\varphi$ at $\delta = 1.0°$. The angles $\theta_1$,

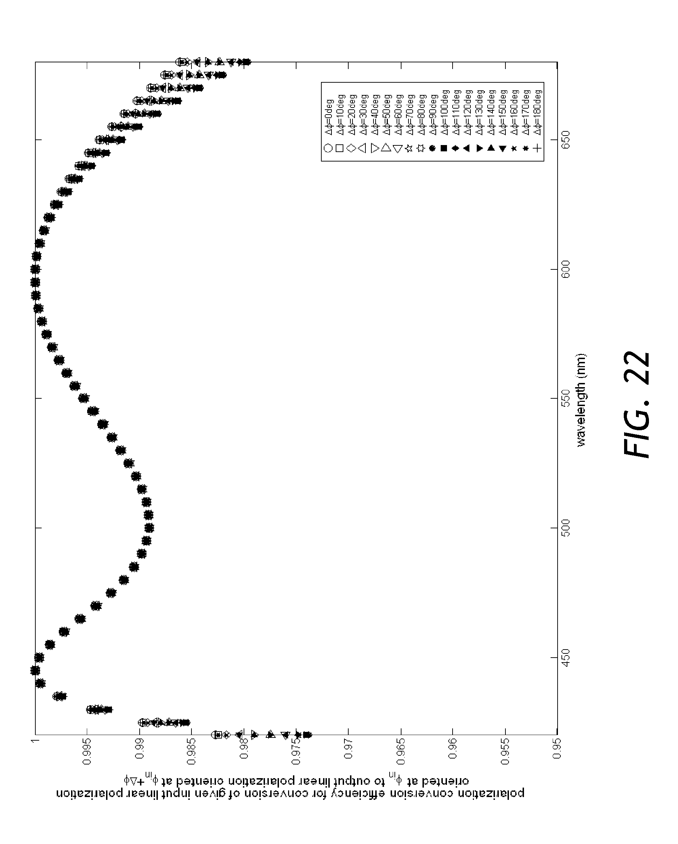

$\theta_2$, and $\theta_3$ are calculated by using formulas (19) to (21). The angles dependence on $\Delta\varphi$ is linear in this case. Turning to FIG. 22, a wavelength dependence of PCE is shown for optical axes angles according to FIG. 21 corresponding to $\Delta\varphi$ values of 0, 10, 20,...180°. Depending on a particular $\Delta\varphi$ value, the minimal PCE plotted in FIG. 22 varies from 97.3% to almost 100%.

The equations (19) to (21) are adopted from Title, in the reference above. An advantage of this embodiment is its simplicity, and there is relatively little variation in the resulting PCE with $\Delta\varphi$. However, the PCE and achromaticity achievable in this embodiment are not as good as in other embodiments presented above.

*Two-layer achromatic linear-to-circular polarization converter for arbitrary $\Delta\varphi(x,y)$*

This particular embodiment of a polarization converter for achromatically converting an input linear polarization distribution $\varphi_{in}(x,y)$ into a circular polarization, with the resulting spectral bandwidth of PCE being substantially the same for any $\Delta\varphi$, consists of two birefringent layers having retardation $\Gamma_{nom1} = \lambda_{nom}/4$ and $\Gamma_{nom2} = \lambda_{nom}/2$, and a distribution of the angles of local optical axes $\theta_1$ and $\theta_2$ defined as follows:

$$\theta_1(\varphi_{in}) = \varphi_{in} + k(\pi/12 + \delta) \tag{22}$$

$$\theta_2(\varphi_{in}) = \varphi_{in} + k(5\pi/12 - \delta) \tag{23}$$

wherein the light propagates first through layer 2, then through layer 1, $k$ = +1 or -1, depending upon whether a left-handed or a right-handed circular polarization is required, and $\delta$ is a modifier angle selected to optimize the achromatic bandwidth and level of PCE for linear-to-circularly polarized light conversion. An optimal value has been found to be $\delta$=1.2° for high conversion efficiency form 420~680nm, with the birefringent material being ROF5151 from Rolic Research Ltd. The values of $0° \le \delta \le 4°$ can be used to achieve reasonably good performance.

As in the previously presented examples of linear polarization converters (rotators), given a spatially varying field of input linear polarization states oriented as $\varphi_{in}(x,y)$, one can spatially vary the optical axis angles of layer 1 and layer 2 according to the equations (22) and (23). The formulation of the composite multi-layer Mueller matrix for each $\varphi_{in}(x,y)$ is done as described earlier. The PCE for linear-to-circular polarization conversion is computed similarly to the conversion efficiency between differently-oriented linear polarization states, except that a circular analyzer is used in the calculation. Therefore, for such an element, the output polarization state would be highly circularly polarized for all wavelengths in the wavelength band of interest.

The two-layer converter described by the equations (22) and (23) can be also used in the reverse propagation direction, with the input state being either left- or right-circularly polarized. Due to reciprocity of light propagation, the output state would then be converted with high efficiency to a spatially varying linear state.

The equations (5) to (23) may be rewritten in a more generalized form so as to allow the modifier parameter $\delta$ to vary continuously as an function of $\Delta\varphi$ and, or $\varphi_{in}$, and not to remain at a fixed value as assumed in the above equations. When rewritten in such a manner, the equations will allow for even higher levels of PCE and wider achromaticity wavelength ranges. However, the equations presented herein have the advantage of simplicity, while allowing one to achieve high levels of achromaticity of polarization conversion over a broad wavelength range. It is understood by the skilled in the art that the concept of spatially varying achromatic polarization converters presented herein may be applied to other known basic achromatic waveplate construction approaches. It is also understood that in actual converters, the PCE can be somewhat lower than the one presented in FIGS. 7, 9, 12, 14, 16, 18, 20, and 22. For example, the PCE of actual converters built according to equations (5) to (23) can be 95% or even 90%.

*Application examples of spatially varying polarization converters*

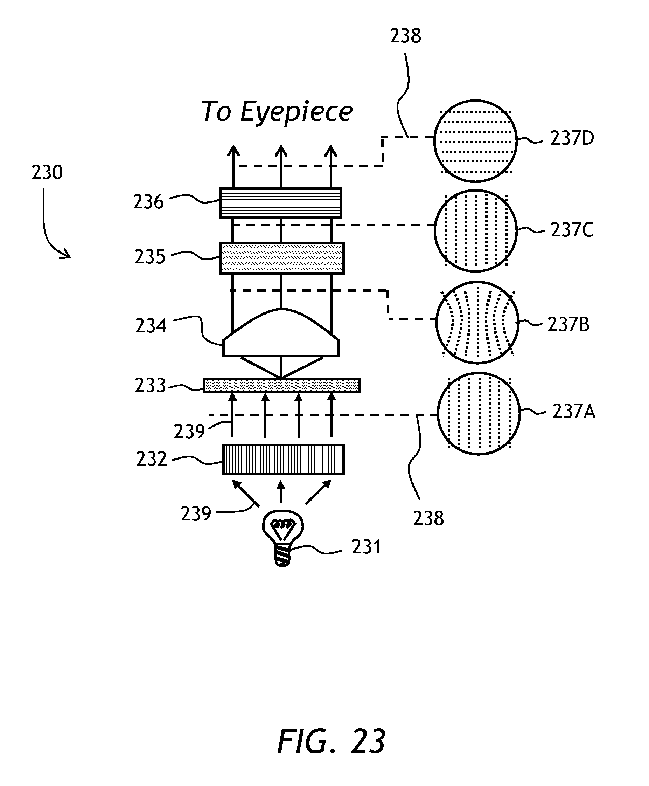

Examples of applications of achromatic polarization converters of the present invention will now be given. One area of application is related to polarization aberration correction. Turning to FIG. 23, a circuit diagram of a polarization microscope is presented showing an optical train 230 of elements comprising a light source 231, a polarizer 232, a sample 233, an objective lens 234, a polarization correcting element 235, and analyzer 236. The circles 237A - 237D represent corresponding optical polarization distributions along the optical train 230, as illustrated with dashed lines 238. In operation, a light 239 emitted by the light source 231 is polarized by the polarizer 232 and is directed to illuminate the sample 233, which is imaged by the objective lens 234. The polarization distribution of light 239 before the sample 233 is shown symbolically by the circle 237A as a uniform distribution of vertical linear polarization. The polarization distribution after the lens 234, shown by the circle 237B, is no longer uniform due to presence of polarization aberrations in the objective lens 234. The function of the polarization correcting element 235, which can be manufactured, for example, as a two-layer element or a three-layer element according to the present invention as described, is to bring the polarization distribution back to linear polarization, as is symbolically shown by the circle 237C. Finally, the polarization analyzer 236, having the polarization direction crossed with that of the polarizer 232, is used to analyze the polarization distribution of the image of the sample 233. The polarization distribution after the analyzer is shown by the circle 237D. Without the polarization converter element 235, the periphery of the image field 237D would appear illuminated as seen in an eyepiece, not shown, due to polarization aberrations introduced by the objective lens 234 and represented by the circle 237B. The polarization converter element 235 allows, therefore, to lower the level of the background illumination and to better highlight a polarization image, not shown, of the sample 233.

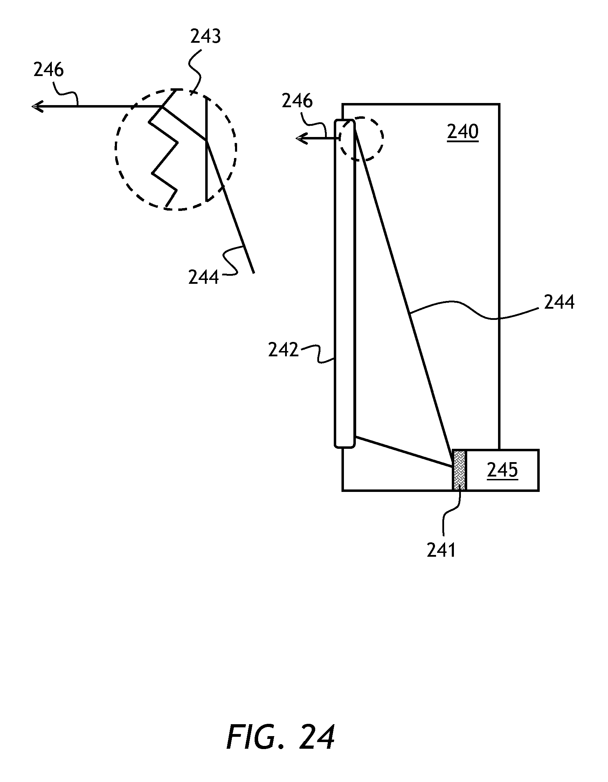

Referring now to FIG. 24, a side cross-sectional view of a rear projection television set 240 employing a polarization converting element 241 of the present invention is presented comprising a screen 242 with a brightness enhancing prismatic film 243 illuminated by an image light 244 emitted by a light engine 245, so as to produce an output beam 246. A Fresnel lens can be used instead of the prismatic film 243.

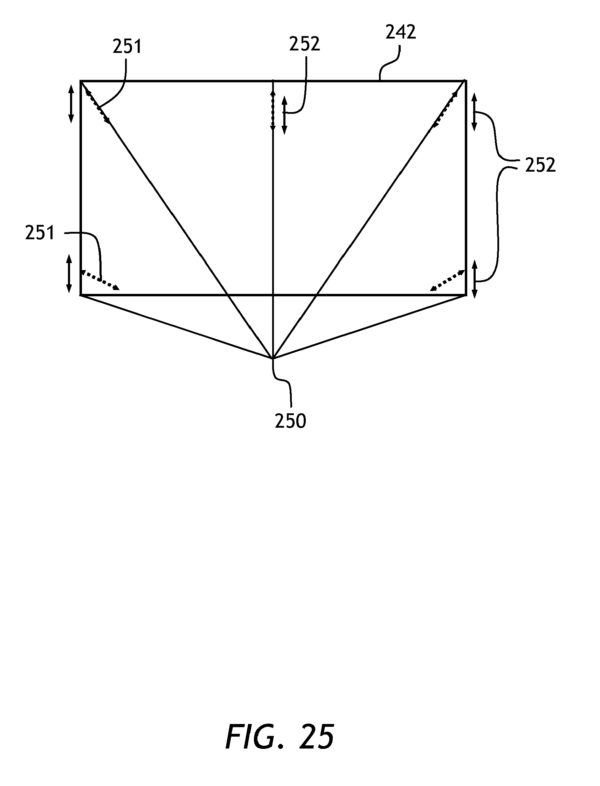

The light engine 245 emits the image light 244 that has a uniform vertically polarized linear polarization distribution. However, because of a steep projection angle, the polarization distribution of the light 244 incident on the prismatic film 243 of the screen 242 leads to non-uniform Fresnel reflection losses across the prismatic film 243, which results in spatial non-uniformity of the luminance of the screen 242. FIG. 25 illustrates the latest point. In FIG. 25, an optical polarization map of the light beam 244 of FIG. 24, illuminating the screen 242 of the rear projection television set 240 is presented, with and without the polarization converting element 241. The linear polarization axis directions without the element 241 are shown as solid arrows 252. The polarization converting element 241 makes the polarization distribution of light incident on the prismatic film 243 of screen 242 radially polarized about a point 250. The corresponding polarization distribution is shown with dotted arrows 251. Converting the polarization distribution to such a radial polarization makes the incident light 244 p-polarized with respect to the prismatic film 243 at all locations of the prismatic film 243. This allows one to considerably reduce Fresnel losses in the film 243 and level out the luminance of the screen 242. The Fresnel losses are reduced due to Brewster effect observed for p-polarized light. In a similar manner, the Fresnel losses of a rotationally symmetrical element with a steep optical profile, for example a high-numerical aperture aspheric lens, can be considerably reduced by employing a radial polarization vortex forming polarization converter, for example the converter 207 of FIG. 2B or the converter 307 of FIGS. 3A, 3B.

A relatively thick side profile of a projection television is a detrimental factor that compares unfavorably to a thin side profile of a flat-panel television set, which is one of main competitive products for projection television sets. In this example, application of a polarization distribution correcting converter of the present invention allows one to considerably reduce the side profile of the projection television, bringing it closer to the profile of a flat-panel television set. Thus, competitiveness of a rear-projection television is considerably improved by utilizing the present invention. More details on general usage of space variant retarders in projection systems can be found in: Sarayeddine et al., "Achromatic Space Variant Retarder for Micro-Display Based Projection Systems", SID 2008 proceedings, 56.2, p.850-853.

Other applications of polarization converting elements of the present invention include spatially varying degree of polarization in such applications in photolithography, optical data storage, and authenticating documents, goods, or articles. The achromaticity of polarization converters allows one to realize important advantages inherent in utilizing more than one wavelength in an optical system. Since most of today's photonics applications involve more than one wavelength of light, the applications of the polarization converters of the present inventions are numerous. For example, multiple-wavelength fluorescence and nonlinear optical microscopy can use a polarization converter for polarization contrast enhancement at many wavelengths simultaneously. The achromatic polarization manipulation can be used to change the optical phase in a high-end imaging applications employing diffraction-limited optics, thereby enhancing optical resolution. The optical fields with certain spatial distributions of polarization, for example polarization vortices, can be employed to manipulate the optical polarization and spatial distribution of a focused optical field in such applications as optical tweezers and femtosecond micromachining. Since a femtosecond optical pulse is necessarily polychromatic, an achromatic polarization converter can be advantageously used to create custom polarization distributions of ultrashort light pulses.

**Claims**

1.  An optical element for converting a lateral distribution of polarization of an optical beam having at least one wavelength band **characterized by** a center wavelength and a bandwidth,
    wherein the conversion is performed from a first to a second pre-determined lateral distribution of polarization, the optical element comprising:

a stack of layers of material, wherein the layers are birefringent, and wherein the birefringence of each layer of the stack is **characterized by** a retardance that is substantially constant across the layer, and a direction of a local axis of birefringence that varies, continuously and gradually, across the layer,

wherein the variations of the direction of the local axes of birefringence of the layers are coordinated therebetween, so as to convert the distribution of polarization of the optical beam from the first to the second distribution of polarization across the entire wavelength band of the optical beam, and

wherein the degree of said conversion of distribution of polarization of the optical beam is **characterized by** a parameter of polarization conversion efficiency (PCE) defined as a ratio of the optical power of the beam having the second lateral distribution of polarization to the optical power of the beam having the first lateral distribution of polarization.

2. An optical element of claim 1, wherein the bandwidth of the wavelength band is at least 10% of the center wavelength of the wavelength band, and PCE $\geq$ 95%.

3. An optical element of claim 1, wherein the optical beam has two non-overlapping bands, wherein the bandwidth of each wavelength band is at least 5% of the corresponding center wavelength of the wavelength band, and PCE in each band is at least 95%.

4. An optical element of claim 1, wherein the bandwidth of the wavelength band is at least 40% of the center wavelength of the wavelength band, and PCE $\geq$ 90%.

5. An optical element of claim 1, wherein the first and the second lateral distributions of polarization are distributions of linear polarization, **characterized by** a local linear polarization axis at any arbitrary point having coordinates (*x, y*), located within a clear aperture of the optical element, and wherein:

the local linear polarization axis for the first lateral distribution forms an angle $\varphi_{in}(x,y)$ with a pre-defined reference axis of the optical element; and
the local linear polarization axis for the second lateral distribution forms an angle $\varphi_{out}(x,y)$ with said pre-defined reference axis.

6. An optical element of claim 5, wherein one of the lateral distributions of the angles $\varphi_{in}(x,y)$ and $\varphi_{out}(x,y)$ is a uniform distribution independent of *x* and *y*.

7. An optical element of claim 5, wherein:

the local linear polarization axis of the second lateral distribution of linear polarization forms an angle $\psi_{out}(\alpha)$ with the pre-defined reference axis at any local point ($\alpha$,*r*) of a polar coordinate system having its origin at a vortex point located in a plane of an outer surface of the optical element, wherein: $\alpha$ is the azimuthal angle; r is a distance between the local point and the vortex point of the polar coordinate system; and the angle $\psi_{out}(\alpha)$ is a function of $\alpha$ only and does not depend on *r*; and
the value of $\psi_{out}(\alpha)$ changes by a multiple of $\pi$ in any closed path traced around the vortex point.

8. An optical element of claim 7, wherein the optical element has a vortex axis perpendicular to the outer surface of the optical element and containing the vortex point thereof, and the local polarization axis of the second lateral distribution of linear polarization at every point of the clear aperture of the optical element passes through the vortex axis thereof.

9. An optical element of claim 5, wherein the stack of birefringent layers consists of a first layer having a first angle $\theta_1(x,y)$ between its local axis of birefringence at the point (*x,y*) and said reference axis, and a second layer having a second angle $\theta_2(x,y)$ between its local axis of birefringence at the point (*x,y*) and said reference axis, wherein

$$
\theta_1(\Delta\varphi,\varphi_{in}) =
\begin{cases}
\varphi_{in} + \Delta\varphi(a - \dfrac{\delta}{\pi/2}) & \text{for} \quad |\Delta\varphi| \le \dfrac{\pi}{2} \\[2ex]
\varphi_{in} + \dfrac{\Delta\varphi}{|\Delta\varphi|}[\dfrac{\pi}{2}(a - \dfrac{\delta}{\pi/2}) + (|\Delta\varphi| - \dfrac{\pi}{2})(a + \dfrac{\delta}{\pi/2})] & \text{for} \quad \dfrac{\pi}{2} < |\Delta\varphi| \le \pi
\end{cases}
,
$$

$$
\theta_2(\Delta\varphi,\varphi_{in}) =
\begin{cases}
\varphi_{in} + \Delta\varphi(b + \dfrac{\delta}{\pi/2}) & \text{for} \quad |\Delta\varphi| \le \dfrac{\pi}{2} \\[2ex]
\varphi_{in} + \dfrac{\Delta\varphi}{|\Delta\varphi|}[\dfrac{\pi}{2}(b + \dfrac{\delta}{\pi/2}) + (|\Delta\varphi| - \dfrac{\pi}{2})(b - \dfrac{\delta}{\pi/2})] & \text{for} \quad \dfrac{\pi}{2} < |\Delta\varphi| \le \pi
\end{cases}
,
$$

wherein the retardance of each birefringent layer is substantially equal to one half of a wavelength of the optical beam; $\varphi_{in} = \varphi_{in}(x,y)$; $\varphi_{out} = \varphi_{out}(x,y)$; $\theta_1 = \theta_1(x,y)$; $\theta_2 = \theta_2(x,y)$; $\Delta\varphi \equiv \varphi_{out} - \varphi_{in}$; $a = \frac{3}{4}$; $b = \frac{1}{4}$; and $0° \le \delta \le 6°$.

**10.** An optical element of claim 5, wherein the stack of birefringent layers consists of:

a first layer having a first angle $\theta_1(x,y)$ between its local axis of birefringence at the point $(x,y)$ and said reference axis;
a second layer having a second angle $\theta_2(x,y)$ between its local axis of birefringence at the point $(x,y)$ and said reference axis, and
a third layer having a third angle $\theta_3(x,y)$ between its local axis of birefringence at the point $(x,y)$ and said reference axis,

wherein:

$$
\theta_1(\Delta\varphi,\varphi_{in}) =
\begin{cases}
\varphi_{in} + \Delta\varphi(a - \dfrac{\delta}{\pi/2}) & \text{for} \quad |\Delta\varphi| \le \dfrac{\pi}{2} \\[2ex]
\varphi_{in} + \dfrac{\Delta\varphi}{|\Delta\varphi|}[\dfrac{\pi}{2}(a - \dfrac{\delta}{\pi/2}) + (|\Delta\varphi| - \dfrac{\pi}{2})(a + \dfrac{\delta}{\pi/2})] & \text{for} \quad \dfrac{\pi}{2} < |\Delta\varphi| \le \pi
\end{cases}
,
$$

$$
\theta_2(\Delta\varphi,\varphi_{in}) = \varphi_{in} + b\Delta\varphi ,
$$

$$
\theta_3(\Delta\varphi,\varphi_{in}) =
\begin{cases}
\varphi_{in} + \Delta\varphi(c + \dfrac{\delta}{\pi/2}) & \text{for} \quad |\Delta\varphi| \le \dfrac{\pi}{2} \\[2ex]
\varphi_{in} + \dfrac{\Delta\varphi}{|\Delta\varphi|}[\dfrac{\pi}{2}(c + \dfrac{\delta}{\pi/2}) + (|\Delta\varphi| - \dfrac{\pi}{2})(c - \dfrac{\delta}{\pi/2})] & \text{for} \quad \dfrac{\pi}{2} < |\Delta\varphi| \le \pi
\end{cases}
,
$$

wherein the retardance of each birefringent layer is substantially equal to one half of a wavelength of the optical beam; $\varphi_{in} = \varphi_{in}(x,y)$; $\varphi_{out} = \varphi_{out}(x,y)$; $\theta_1 = \theta_1(x,y)$; $\theta_2 = \theta_2(x,y)$; $\theta_3 = \theta_3(x,y)$; $\Delta\varphi \equiv \varphi_{out} - \varphi_{in}$; $a = 7/8$; $b = 1/2$; $c = 1/8$; and $0° \le \delta \le 6°$.

**11.** An optical element of claim 5, wherein the stack of birefringent layers consists of:

a first layer having a first angle $\theta_1(x,y)$ between its local axis of birefringence at the point $(x,y)$ and said reference axis;
a second layer having a second angle $\theta_2(x,y)$ between its local axis of birefringence at the point $(x,y)$ and said reference axis, and
a third layer having a third angle $\theta_3(x,y)$ between its local axis of birefringence at the point $(x,y)$ and said reference axis,

wherein:

$$\theta_1(\Delta\varphi,\varphi_{in}) = \begin{cases} \varphi_{in} + \Delta\varphi(a - \dfrac{\delta}{\pi/2}) & for & |\Delta\varphi| \le \dfrac{\pi}{2} \\ \varphi_{in} + \dfrac{\Delta\varphi}{|\Delta\varphi|}[\dfrac{\pi}{2}(a - \dfrac{\delta}{\pi/2}) + (|\Delta\varphi| - \dfrac{\pi}{2})(a + \dfrac{\delta}{\pi/2})] & for & \dfrac{\pi}{2} < |\Delta\varphi| \le \pi \end{cases} ,$$

$$\theta_2(\Delta\varphi,\varphi_{in}) = \varphi_{in} + b\Delta\varphi ,$$

$$\theta_3(\Delta\varphi,\varphi_{in}) = \begin{cases} \varphi_{in} + \Delta\varphi(c + \dfrac{\delta}{\pi/2}) & for & |\Delta\varphi| \le \dfrac{\pi}{2} \\ \varphi_{in} + \dfrac{\Delta\varphi}{|\Delta\varphi|}[\dfrac{\pi}{2}(c + \dfrac{\delta}{\pi/2}) + (|\Delta\varphi| - \dfrac{\pi}{2})(c - \dfrac{\delta}{\pi/2})] & for & \dfrac{\pi}{2} < |\Delta\varphi| \le \pi \end{cases} ,$$

wherein the retardance of each birefringent layer is substantially equal to one half of a wavelength of the optical beam; $\varphi_{in} = \varphi_{in}(x,y)$; $\varphi_{out} = \varphi_{out}(x,y)$; $\theta_1 = \theta_1(x,y)$; $\theta_2 = \theta_2(x,y)$; $\theta_3 = \theta_3(x,y)$; $\Delta\varphi \equiv \varphi_{out} - \varphi_{in}$;

$$a = \begin{cases} \dfrac{7}{8} & for & |\Delta\varphi| \le \dfrac{7\pi}{8} \\ \dfrac{|\Delta\varphi|}{\pi} & for & \dfrac{7\pi}{8} < |\Delta\varphi| \le \pi \end{cases} \quad ; \quad b = 1/2; \quad c = \begin{cases} \dfrac{1}{8} & for & |\Delta\varphi| \le \dfrac{7\pi}{8} \\ 1 - \dfrac{|\Delta\varphi|}{\pi} & for & \dfrac{7\pi}{8} < |\Delta\varphi| \le \pi \end{cases} ;$$

and $0° \le \delta \le 6°$.

**12.** An optical element of claim 5, wherein the stack of birefringent layers consists of:

a first layer having a first angle $\theta_1(x,y)$ between its local axis of birefringence at the point $(x,y)$ and said reference axis;
a second layer having a second angle $\theta_2(x,y)$ between its local axis of birefringence at the point $(x,y)$ and said reference axis, and
a third layer having a third angle $\theta_3(x,y)$ between its local axis of birefringence at the point $(x,y)$ and said reference axis,

wherein:

$$\theta_1(\Delta\varphi,\varphi_{in}) = \begin{cases} \varphi_{in} + \Delta\varphi(a - \dfrac{\delta}{\pi/2}) & for & |\Delta\varphi| \leq \dfrac{\pi}{2} \\[2ex] \varphi_{in} + \dfrac{\Delta\varphi}{|\Delta\varphi|}[\dfrac{\pi}{2}(a - \dfrac{\delta}{\pi/2}) + (|\Delta\varphi| - \dfrac{\pi}{2})(a + \dfrac{\delta}{\pi/2})] & for & \dfrac{\pi}{2} < |\Delta\varphi| \leq \dfrac{7\pi}{8} \\[2ex] \varphi_{in} + \dfrac{\Delta\varphi}{|\Delta\varphi|}\dfrac{\theta_1(7\pi/8,0) + (|\Delta\varphi| - 7\pi/8)(\pi - \theta_1(7\pi/8,0))}{\pi/8} & for & \dfrac{7\pi}{8} < |\Delta\varphi| \leq \pi \end{cases},$$

$$\theta_2(\Delta\varphi,\varphi_{in}) = \varphi_{in} + b\Delta\varphi,$$

$$\theta_3(\Delta\varphi,\varphi_{in}) = \begin{cases} \varphi_{in} + \Delta\varphi(c + \dfrac{\delta}{\pi/2}) & for & |\Delta\varphi| \leq \dfrac{\pi}{2} \\[2ex] \varphi_{in} + \dfrac{\Delta\varphi}{|\Delta\varphi|}[\dfrac{\pi}{2}(c + \dfrac{\delta}{\pi/2}) + (|\Delta\varphi| - \dfrac{\pi}{2})(c - \dfrac{\delta}{\pi/2})] & for & \dfrac{\pi}{2} < |\Delta\varphi| \leq \dfrac{7\pi}{8} \\[2ex] \varphi_{in} + \dfrac{\Delta\varphi}{|\Delta\varphi|}\dfrac{\theta_3(7\pi/8,0) + (|\Delta\varphi| - 7\pi/8)(-\theta_3(7\pi/8,0))}{\pi/8} & for & \dfrac{7\pi}{8} < |\Delta\varphi| \leq \pi \end{cases},$$

wherein the retardance of each birefringent layer is substantially equal to one half of a wavelength of the optical beam; $\varphi_{in} = \varphi_{in}(x,y)$; $\varphi_{out} = \varphi_{out}(x,y)$; $\theta_1 = \theta_1(x,y)$; $\theta_2 = \theta_2(x,y)$; $\theta_3 = \theta_3(x,y)$; $\Delta\varphi \equiv \varphi_{out} - \varphi_{in}$; $a = 7/8$; $b = 1/2$; $c = 1/8$; and $0° \leq \delta \leq 6°$.

13. An optical element of claim 5, wherein the stack of birefringent layers consists of:

a first layer having a first angle $\theta_1(x,y)$ between its local axis of birefringence at the point $(x,y)$ and said reference axis;

a second layer having a second angle $\theta_2(x,y)$ between its local axis of birefringence at the point $(x,y)$ and said reference axis, and

a third layer having a third angle $\theta_3(x,y)$ between its local axis of birefringence at the point $(x,y)$ and said reference axis,

wherein:

$$\theta_1(\Delta\varphi,\varphi_{in}) = \begin{cases} \varphi_{in} + \Delta\varphi(a - \dfrac{\delta}{\pi/2}) & for & |\Delta\varphi| \leq \dfrac{\pi}{2} \\[2ex] 2\theta_2 - \theta_3 & for & \dfrac{\pi}{2} < |\Delta\varphi| \leq \pi \end{cases},$$

$$\theta_2(\Delta\varphi,\varphi_{in}) = \varphi_{in} + b\Delta\varphi,$$

$$\theta_3(\Delta\varphi,\varphi_{in}) = \begin{cases} \varphi_{in} + \Delta\varphi(c + \dfrac{\delta}{\pi/2}) & for & |\Delta\varphi| \leq \dfrac{\pi}{2} \\[4mm] \varphi_{in} + \dfrac{\Delta\varphi}{|\Delta\varphi|}\dfrac{\pi}{2}(c + \dfrac{\delta}{\pi/2}) & for & \dfrac{\pi}{2} < |\Delta\varphi| \leq \pi \end{cases},$$

wherein the retardance of each birefringent layer is substantially equal to one half of a wavelength of the optical beam; $\varphi_{in} = \varphi_{in}(x,y)$; $\varphi_{out} = \varphi_{out}(x,y)$; $\theta_1 = \theta_1(x,y)$; $\theta_2 = \theta_2(x,y)$; $\theta_3 = \theta_3(x,y)$; $\Delta\varphi = \varphi_{out} - \varphi_{in}$; $a = 5/6$; $b = 1/2$; $c = 1/6$; and $-4° \leq \delta \leq 0°$.

**14.** An optical element of claim 5, wherein the stack of birefringent layers consists of:

a first layer having a first angle $\theta_1(x,y)$ between its local axis of birefringence at the point $(x,y)$ and said reference axis;
a second layer having a second angle $\theta_2(x,y)$ between its local axis of birefringence at the point $(x,y)$ and said reference axis, and
a third layer having a third angle $\theta_3(x,y)$ between its local axis of birefringence at the point $(x,y)$ and said reference axis,

wherein:

$$\theta_1(\Delta\varphi, \varphi_{in}) = \varphi_{in} + \Delta\varphi/2 - \pi/6 + \delta,$$

$$\theta_2(\Delta\varphi, \varphi_{in}) = \varphi_{in} + \Delta\varphi/2 + \pi/6 - \delta,$$

$$\theta_3(\Delta\varphi, \varphi_{in}) = \theta_1(\Delta\varphi, \varphi_{in}),$$

wherein the retardance of each birefringent layer is substantially equal to one half of a wavelength of the optical beam; $\varphi_{in} = \varphi_{in}(x,y)$; $\varphi_{out} = \varphi_{out}(x,y)$; $\theta_1 = \theta_1(x,y)$; $\theta_2 = \theta_2(x,y)$; $\theta_3 = \theta_3(x,y)$; $\Delta\varphi \equiv \varphi_{out} - \varphi_{in}$; and $0° \leq \delta \leq 4°$.

**15.** An optical element of claim 1, wherein:

the first lateral distribution of polarization is a distribution of linear polarization **characterized by** a local linear polarization axis at any arbitrary point $(x,y)$ located within a clear aperture of the optical element, wherein the local linear polarization axis of the first lateral distribution forms an angle $\varphi_{in}(x,y)$ with a pre-defined reference axis of the optical element; and
the second lateral distribution of polarization consists entirely of a left-handed circular polarization or a right-handed circular polarization.

**16.** An optical element of claim 15, wherein the stack of birefringent layers consists of a first layer having a first angle $\theta_1(x,y)$ between its local axis of birefringence at the point $(x,y)$ and said reference axis, and a second layer having a second angle $\theta_2(x,y)$ between its local axis of birefringence at the point $(x,y)$ and said reference axis, wherein

$$\theta_1(\varphi_{in}) = \varphi_{in} + k(\pi/12 + \delta) ,$$

$$\theta_2(\varphi_{in}) = \varphi_{in} + \boldsymbol{k}(5\pi/12 - \delta) \,,$$

wherein the retardance of the first and the second layer is substantially equal to one quarter and one half, respectively, of a wavelength of the optical beam; $\varphi_{in} = \varphi_{in}(\boldsymbol{x,y})$; $\theta_1 = \theta_1(\boldsymbol{x,y})$; $\theta_2 = \theta_2(\boldsymbol{x,y})$; $\boldsymbol{k}$ = +1 or -1 for the right-handed and left-handed circular second lateral distribution of polarization, respectively, and $0° \leq \delta \leq 4°$.

17. An optical element of claim 1, wherein the birefringent layers comprise a photo-aligned polymerized photopolymer, wherein the direction of the local axis of birefringence of the layers varies spatially according to a spatial variation of a direction of alignment of the photo-aligned photopolymer.

18. An optical element of claim 17, wherein the birefringent layers comprise a layer of a crosslinkable liquid crystal material aligned to said photo-aligned polymerized photopolymer and solidified by crosslinking.

19. An optical element of claim 1, wherein the birefringent layers comprise an alignment layer and a liquid crystal layer aligned by said alignment layer, wherein the direction of the local axis of birefringence of the layers varies spatially according to a spatial variation of the direction of alignment of the alignment layer.

20. An optical element of claim 19, wherein the alignment layer comprises one of: a photo-aligned layer of linearly polymerizable photopolymer; a buffed polymer layer; a self-assembled layer; and an obliquely deposited alignment layer.

21. An optical element of claim 1, further comprising a reflector optically coupled to the stack of birefringent layers, so as to form a double-pass optical path through said stack of the birefringent layers.

22. An optical element of claim 1, wherein the birefringent layers comprise birefringent sub-wavelength grating structures.

23. An optical element of claim 1, further comprising a linear or circular polarizer element optically coupled to the stack of birefringent layers, so as to form a spatially-varying polarization state polarizer.

24. An optical element of claim 23, wherein the polarizer element is selected from a group consisting of: a wire-grid polarizer; a polarization beam splitter; a dichroic polarizer; a cholesteric polarizer; a prism polarizer; a Brewster-angle polarizer; and an interference polarizer.

25. A polarization-transforming polarizer comprising:

a first optical element of claim 1, for receiving the optical beam and converting its lateral distribution of polarization to an intermediate distribution of polarization;
a polarizer element optically coupled to the first optical element, for polarizing the optical beam having the intermediate distribution of polarization; and
a second optical element of claim 1, optically coupled to said polarizer element, for further converting the lateral distribution of polarization of the optical beam, and for outputting the optical beam.

26. An optical element of claim 25, wherein the polarizer element is selected from a group consisting of: a wire-grid polarizer; a polarization beam splitter; a dichroic polarizer; a cholesteric polarizer; a prism polarizer; a Brewster-angle polarizer; and an interference polarizer.

27. Use of an optical element of claim 1 for achromatically spatially varying a polarization state of light in an application selected from a group consisting of: polarization microscopy; photolithography; imaging; visual displays; optical data storage; authenticating documents, goods, or articles; and femtosecond micromachining.

28. Use of an optical element of claim 1 for achromatically correcting spatial polarization aberrations in an optical system.

29. Use of an optical element of claim 28 for achromatically correcting spatial polarization aberrations in a projection display system.

30. Use of an optical element of claim 1 for resolution enhancement in an application selected from a group consisting of: polarization microscopy; photolithography; imaging; optical data storage; and femtosecond micromachining.

31. Use of an optical element of claim 7 for creating achromatic polarization vortices in an optical tweezers system or in a femtosecond micromachining system.

32. Use of an optical element of claim 1 for reducing Fresnel losses in an optical imaging system.

FIG. 1

*Prior Art*

FIG. 2A

FIG. 2B

FIG. 3A

FIG. 3B

FIG. 4

x-axis (mm)

y-axis (mm)

FIG. 5

*FIG. 6*

*FIG. 7*

FIG. 8

FIG. 9

EP 2 088 456 A2

FIG. 10

FIG. 11

FIG. 12

wavelength (nm)

polarization conversion efficiency for conversion of given input linear polarization to target output linear polarization

FIG. 13

*FIG. 14*

*FIG. 15*

*FIG. 16*

*FIG. 17*

FIG. 18

FIG. 19

FIG. 20

FIG. 21

FIG. 22

FIG. 23

**FIG. 24**

FIG. 25

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6900865 B, Tillin
- US 6380997 B, Sharp
- US 6078374 A
- US 6046786 A

### Non-patent literature cited in the description

- Space-variant Pancharatnam-Berry phase optical elements with computer-generated subwavelength gratings. *Opt. Lett.,* 2002, vol. 27 (13), 1141-1143
- **STALDER et al.** Linearly polarized light with axial symmetry generated by liquid-crystal polarization converters. *Opt. Lett.,* 01 December 1996, vol. 21 (23), 1948-1950
- **KOESTER.** Achromatic combinations of half-wave plates. *J. Opt. Soc. Of America,* 1959, vol. 49 (4), 405-409
- Achromatic wave plates for optical pickup units fabricated by use of imprint lithography. *Opt. Lett.,* 2005, vol. 30, 2614-2616
- **CHUN et al.** Achromatic waveplate array for polarimetric imaging. *SPIE - Int. Soc. Opt. Eng.,* 2002, vol. 4481, 216-27
- Improvement of birefringent filters. 2: Achromatic waveplates. *Applied Optics,* 1975, vol. 14, 229-237
- **TITLE et al.** Achromatic retardation plates. *SPIE Vol.308: Polarizers and Applications,* 1981, vol. 308, 120-125
- **PANCHARATNAM.** Achromatic combinations of birefringent plates, Part I: An achromatic circular polarizer. *Indian Academy Science Proceed.,* 1955, vol. 41, 130-136
- **PANCHARATNAM.** Achromatic combinations of birefringent plates, Part II: An achromatic quarter-wave plate. *Indian Academy Science Proceed.,* 1955, vol. 41, 137-144
- **MCINTYRE et al.** Achromatic wave plates for the visible spectrum. *J. Opt. Soc. Of America,* 1968, vol. 58 (12), 1575-1580
- **SARAYEDDINE et al.** Achromatic Space Variant Retarder for Micro-Display Based Projection Systems. *SID 2008 proceedings,* 2008, vol. 56.2, 850-853